# EUROPEAN PATENT APPLICATION

(11) **EP 4 529 320 A1**
(43) Date of publication of application: **26.03.2025**
(21) Application number: 23823214.4
(22) Date of filing: 15.06.2023
(51) Int. Cl.: H04W 72/04

(54) **COMMUNICATION METHOD AND COMMUNICATION APPARATUS**

(30) Priority: 17.06.2022 CN 202210689320
(71) Applicant: Huawei Technologies Co., Ltd., Shenzhen, Guangdong 518129 (CN)
(72) Inventor: LI, Cheng, Shenzhen, Guangdong 518129 (CN); HUANG, Su, Shenzhen, Guangdong 518129 (CN)
(74) Representative: Körber, Martin Hans
(86) International application number: PCT/CN2023/100379
(87) International publication number: WO 2023/241648

(57) **Abstract**

Embodiments of this application disclose a communication method and a communication apparatus, to improve positioning precision and positioning performance. The method in embodiments of this application includes: A first communication apparatus determines a first resource. The first resource is used to transmit a first positioning reference signal, the first resource occupies at least two time domain symbols, the at least two time domain symbols are located in a same slot, the at least two time domain symbols includes a first time domain symbol and a second time domain symbol, and the first resource occupies a same frequency domain resource on the first time domain symbol and the second time domain symbol. The first communication apparatus sends the first positioning reference signal to a second communication apparatus on the first resource.

## Description

This application claims priority to Chinese Patent Application No. 202210689320.7, filed with the China National Intellectual Property Administration on June 17, 2022 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

A positioning function is an important function of a communication system. Currently, in a positioning process, transmission of a positioning reference signal may be performed between a transmit end device and a receive end device to position the transmit end device and/or the receive end device. However, how to improve positioning precision is a problem worthy of attention.

### SUMMARY

This application provides a communication method and a communication apparatus, to improve positioning precision and positioning performance.

A first aspect of this application provides a communication method. The method includes:
A first communication apparatus determines a first resource, where the first resource is used to transmit a first positioning reference signal, the first resource is located in a first time-frequency unit, the first resource occupies at least two time domain symbols, the at least two time domain symbols include a first time domain symbol and a second time domain symbol, and the first resource occupies a same frequency domain resource on the first time domain symbol and the second time domain symbol; and the first communication apparatus sends the first positioning reference signal to a second communication apparatus on the first resource.

It can be learned from the foregoing solution that the first resource occupies the same frequency domain resource on the first time domain symbol and the second time domain symbol. This helps the second communication apparatus perform precise positioning on the first communication apparatus or the second communication apparatus, to improve positioning precision. For example, a Doppler shift between devices introduces consecutive phase changes in time domain. Therefore, the second communication apparatus may accurately estimate a Doppler shift between the first communication apparatus and the second communication apparatus by using a phase difference between a phase obtained by measuring a first positioning reference signal on the first time domain symbol and a phase obtained by measuring a first positioning reference signal on the second time domain symbol. Doppler shift estimation performance is improved. In this way, the second communication apparatus can compensate for, based on the Doppler shift, some multipath parameters obtained through measurement, and then perform precise positioning on the first communication apparatus or the second communication apparatus by using compensated multipath parameters. Therefore, the positioning precision is improved, and positioning performance is improved.

A second aspect of this application provides a communication method. The method includes:
A second communication apparatus receives a first positioning reference signal sent by a first communication apparatus on a first resource, where the first resource occupies at least two time domain symbols, the at least two time domain symbols are located in a same slot, the at least two time domain symbols include a first time domain symbol and a second time domain symbol, and the first resource occupies a same frequency domain resource on the first time domain symbol and the second time domain symbol; the second communication apparatus measures the first positioning reference signal to obtain a measurement result; the second communication apparatus positions the first communication apparatus or the second communication apparatus based on the measurement result; or the second communication apparatus sends the measurement result to a third communication apparatus, where the measurement result is used by the third communication apparatus to position the first communication apparatus or the second communication apparatus.

It can be learned from the foregoing solution that the first resource occupies the same frequency domain resource on the first time domain symbol and the second time domain symbol. In this way, the second communication apparatus performs precise positioning on the first communication apparatus or the second communication apparatus, to improve positioning precision. For example, a Doppler shift between devices introduces consecutive phase changes in time domain. Therefore, the second communication apparatus may accurately estimate a Doppler shift between the first communication apparatus and the second communication apparatus by using a phase difference between a phase obtained by measuring a first positioning reference signal on the first time domain symbol and a phase obtained by measuring a first positioning reference signal on the second time domain symbol. Doppler shift estimation performance is improved. In this way, the second communication apparatus can compensate for, based on the Doppler shift, some multipath parameters obtained through measurement, and then perform precise positioning on the first communication apparatus or the second communication apparatus by using compensated multipath parameters. Therefore, the positioning precision is improved, and positioning performance is improved.

A third aspect of this application provides a communication method. The method includes:
A fourth communication apparatus sends first configuration information to a first communication apparatus. The first configuration information is used to configure a first resource, the first resource occupies Y time domain symbols in time domain, and a comb value corresponding to the first resource is X, where Y is equal to X plus 1, or Y is equal to an integer multiple of X and plus 1, or X is less than Y and Y is not an integer multiple of X.

In the foregoing technical solution, the fourth communication apparatus indicates, by using the first configuration information, a quantity of time domain symbols occupied by the first resource and the comb value corresponding to the first resource. The fourth communication apparatus indirectly indicates, by using several possible relationships between the quantity of time domain symbols and the comb value, that the first resource needs to occupy a same frequency domain resource on a first time domain symbol and a second time domain symbol. In this way, the first communication apparatus determines the first resource, to ensure positioning precision.

A fourth aspect of this application provides a communication method. The method includes:
A fourth communication apparatus sends first indication information to a first communication apparatus. The first indication information indicates that a first resource occupies a same frequency domain resource on a first time domain symbol and a second time domain symbol, the first resource occupies at least two time domain symbols, the at least two time domain symbols are located in a same slot, and the first resource is used to transmit a first positioning reference signal of the first communication apparatus.

In the foregoing technical solution, the fourth communication apparatus indicates, by using the first indication information, that the first resource occupies the same frequency domain resource on the first time domain symbol and the second time domain symbol. In this way, the first communication apparatus determines the first resource, to ensure positioning precision.

Based on any one of the first aspect to the fourth aspect, in a first implementation of this application, the first time-frequency unit occupies one slot, half a slot, or a part of time domain symbols in one slot in time domain.

In this implementation, a size of a time domain resource occupied by the first time-frequency unit in time domain is shown. It can be learned that the first time-frequency unit falls in one slot, half a slot, or a part of time domain symbols in one slot. Therefore, the technical solution of this application can be adapted to a positioning scenario in which a quantity of available time domain symbols is limited, for example, is adapted to a positioning scenario in which a quantity of available time domain symbols on a sidelink is limited.

Based on any one of the first aspect to the fourth aspect or the first implementation, in a second implementation of this application, the first time domain symbol is a 1^{st} time domain symbol occupied by the first resource, and the second time domain symbol is a last time domain symbol or a second last time domain symbol occupied by the first resource.

In this implementation, positions of the first time domain symbol and the second time domain symbol are shown. A Doppler shift between devices introduces consecutive phase changes in time domain. Therefore, the implementations shown above help a second communication apparatus precisely determine a Doppler shift between the first communication apparatus and the second communication apparatus. In other words, the second communication apparatus may estimate the Doppler shift by using a phase difference between a first phase obtained by measuring the first positioning reference signal on the first time domain symbol and a second phase obtained by measuring the first positioning reference signal on the second time domain symbol. However, because an interval between the first time domain symbol and the second time domain symbol is large, the phase difference is also large. In this way, the second communication apparatus can accurately estimate the Doppler shift based on the phase difference, to ensure precision of the Doppler shift.

Based on any one of the first aspect to the fourth aspect, the first implementation, or the second implementation, in a third implementation of this application, the first time domain symbol is an automatic gain control (automatic gain control, AGC) symbol, and the first time domain symbol and the second time domain symbol are inconsecutive.

In this implementation, the AGC symbol is used to occupy a same frequency domain resource on time domain symbols on which a positioning reference signal is located. Therefore, the second communication apparatus precisely estimates the Doppler shift between the first communication apparatus and the second communication apparatus, to ensure the positioning precision. Further, a problem that time-frequency resources are insufficient in the positioning scenario in which the quantity of available time domain symbols is limited is effectively resolved. For example, the method is adapted to the positioning scenario in which the quantity of available time domain symbols on the sidelink is limited.

Based on any one of the first aspect to the fourth aspect or any one of the first implementation to the third implementation, in a fourth implementation of this application, the first resource occupies five, seven, nine, or 11 time domain symbols in time domain.

In this implementation, the first resource occupies an odd quantity of time domain symbols. This application provides an implementation of a frequency domain resource occupied by the first resource in frequency domain for this implementation. This helps adapt to the positioning scenario in which the quantity of available time domain symbols is limited, for example, adapt to the positioning scenario in which the quantity of available time domain symbols on the sidelink is limited.

Based on any one of the first aspect to the fourth aspect or any one of the first implementation to the fourth implementation, in a fifth implementation of this application, a quantity of time domain symbols occupied by the first resource in time domain is 1 greater than a comb value corresponding to the first resource.

In this implementation, it is shown that the quantity of time domain symbols occupied by the first resource is 1 greater than the comb value corresponding to the first resource. Therefore, the first resource occupies the same frequency domain resource on the first time domain symbol and the second time domain symbol. In this way, Doppler shift estimation performance is ensured and the positioning precision is improved.

Based on any one of the first aspect to the fourth aspect or any one of the first implementation to the fourth implementation, in a sixth implementation of this application, the first resource occupies Y time domain symbols in time domain, a comb value corresponding to the first resource is X, and Y is equal to an integer multiple of X and plus 1.

In this implementation, the first resource occupies Y time domain symbols in time domain, the comb value corresponding to the first resource is X, and Y is equal to an integer multiple of X and plus 1. Therefore, the first resource occupies the same frequency domain resource on the first time domain symbol and the second time domain symbol. In this way, the Doppler shift estimation performance is ensured and the positioning precision is improved. In addition, Y may be equal to an integer multiple of X and plus 1. X and Y are related to a quantity of available time domain symbols in one slot. A larger quantity of available time domain symbols indicates a larger value of X and a larger value of Y. A larger value of X indicates a larger value of Y, and this helps increase a multiplexing capacity in the slot.

Based on any one of the first aspect to the fourth aspect or any one of the first implementation to the fourth implementation, in a seventh implementation of this application, the first resource occupies Y time domain symbols in time domain, the comb value corresponding to the first resource is X, X is less than Y, and Y is not an integer multiple of X.

This implementation helps implement that the first resource occupies the same frequency domain resource on the first time domain symbol and the second time domain symbol. In this way, the Doppler shift estimation performance is ensured and the positioning precision is improved. In addition, X is less than Y, and Y is not an integer multiple of X. X and Y are related to the quantity of available time domain symbols in one slot. A larger quantity of available time domain symbols indicates a larger value of X and a larger value of Y. A larger value of X indicates a larger value of Y, and this helps increase the multiplexing capacity in the slot.

Based on any one of the first aspect to the fourth aspect or any one of the first implementation to the seventh implementation, in an eighth implementation of this application, the at least two time domain symbols further include a third time domain symbol, and the first resource occupies a same frequency domain resource on the third time domain symbol and the first time domain symbol.

In this implementation, the first resource occupies a same frequency domain resource on the third time domain symbol and a fourth time domain symbol. This helps the second communication apparatus precisely determine the Doppler shift between the first communication apparatus and the second communication apparatus.

Based on any one of the first aspect to the fourth aspect or any one of the first implementation to the seventh implementation, in a ninth implementation of this application, the at least two time domain symbols further include a fourth time domain symbol and a fifth time domain symbol, and the first resource occupies a same frequency domain resource on the fourth time domain symbol and the fifth time domain symbol.

In this implementation, the first resource occupies the same frequency domain resource on the first time domain symbol and the second time domain symbol, and the first resource occupies the same frequency domain resource on the fourth time domain symbol and the fifth time domain symbol. This helps the second communication apparatus precisely determine the Doppler shift between the first communication apparatus and the second communication apparatus.

Based on any one of the first aspect to the fourth aspect or any one of the first implementation to the ninth implementation, in a tenth implementation of this application, there is an equal frequency domain interval between any two adjacent sub-carriers.

In this implementation, there is an equal frequency domain interval between any two adjacent sub-carriers of the first resource on a same time domain symbol. This helps implement multi-user multiplexing of a time-frequency resource and improve a multiplexing capacity in a slot.

Based on any one of the first aspect to the fourth aspect or any one of the first implementation to the tenth implementation, in an eleventh implementation of this application, a bandwidth occupied by the first resource in frequency domain is a resource pool bandwidth.

Based on the first aspect or any one of the first implementation to the eleventh implementation, in a twelfth implementation of this application, the method further includes:
The first communication apparatus receives first configuration information from a fourth communication apparatus. The first configuration information is used to configure the first resource, the first resource occupies Y time domain symbols in time domain, and a comb value corresponding to the first resource is X, where Y is equal to X plus 1, or Y is equal to an integer multiple of X and plus 1, or X is less than Y and Y is not an integer multiple of X.

That a first communication apparatus determines a first resource includes:

The first communication apparatus determines the first resource based on the first configuration information.

In this implementation, the fourth communication apparatus indicates, by using the first configuration information, the quantity of time domain symbols occupied by the first resource and the comb value corresponding to the first resource. The fourth communication apparatus indirectly indicates, by using several possible relationships between the quantity of time domain symbols and the comb value, that the first resource needs to occupy the same frequency domain resource on the first time domain symbol and the second time domain symbol. In this way, the first communication apparatus determines the first resource, to ensure the positioning precision.

Based on the first aspect or any one of the first implementation to the eleventh implementation, in a thirteenth implementation of this application, the method further includes:

The first communication apparatus receives first indication information from a fourth communication apparatus. The first indication information indicates that the first resource occupies the same frequency domain resource on the first time domain symbol and the second time domain symbol.

That a first communication apparatus determines a first resource includes:
The first communication apparatus determines the first resource based on the first indication information.

In this implementation, the fourth communication apparatus indicates, by using the first indication information, that the first resource occupies the same frequency domain resource on the first time domain symbol and the second time domain symbol. In this way, the first communication apparatus determines the first resource, to ensure the positioning precision.

Based on any one of the first aspect to the fourth aspect or any one of the first implementation to the thirteenth implementation, in a fourteenth implementation of this application, the first time-frequency unit further includes a second resource, the second resource is used to transmit a second positioning reference signal of a fifth communication apparatus, the second resource occupies at least two time domain symbols, the at least two time domain symbols include a sixth time domain symbol and a seventh time domain symbol, and the second resource occupies a same frequency domain resource on the sixth time domain symbol and the seventh time domain symbol. The first resource and the second resource occupy a same time domain resource, and frequency domain resources occupied by the first resource and the second resource on a same time domain symbol meets a frequency division multiplexing relationship; or the first resource and the second resource occupy different time domain resources.

In this implementation, the frequency domain resources occupied by the first resource and the second resource on the same time domain symbol may meet the frequency division multiplexing relationship. Alternatively, the first resource and the second resource occupy different time domain resources. This helps implement the multi-user multiplexing of the time-frequency resource and improve a multiplexing capacity of a plurality of users in a single slot.

A fifth aspect of this application provides a first communication apparatus, including:
a processing module, configured to determine a first resource, where
the first resource is used to transmit a first positioning reference signal, the first resource occupies at least two time domain symbols, the at least two time domain symbols are located in a same slot, the at least two time domain symbols include a first time domain symbol and a second time domain symbol, and the first resource occupies a same frequency domain resource on the first time domain symbol and the second time domain symbol; and
a transceiver module, configured to send the first positioning reference signal to a second communication apparatus on the first resource.

A sixth aspect of this application provides a second communication apparatus, including:
a transceiver module, configured to receive a first positioning reference signal sent by a first communication apparatus on a first resource, where
the first resource occupies at least two time domain symbols, the first resource occupies at least two time domain symbols, the at least two time domain symbols include a first time domain symbol and a second time domain symbol, and the first resource occupies a same frequency domain resource on the first time domain symbol and the second time domain symbol; and
a processing module, configured to: measure the first positioning reference signal to obtain a measurement result; and position the first communication apparatus or the second communication apparatus based on the measurement result.

A seventh aspect of this application provides a fourth communication apparatus, including:
a transceiver module, configured to send first configuration information to a first communication apparatus. The first configuration information is used to configure a first resource, the first resource occupies Y time domain symbols in time domain, and a comb value corresponding to the first resource is X, where Y is equal to X plus 1, or Y is equal to an integer multiple of X and plus 1, or X is less than Y and Y is not an integer multiple of X.

An eighth aspect of this application provides a fourth communication apparatus, including:
a transceiver module, configured to send first indication information to a first communication apparatus. The first indication information indicates that a first resource occupies a same frequency domain resource on a first time domain symbol and a second time domain symbol, the first resource occupies at least two time domain symbols, the at least two time domain symbols are located in a same slot, and the first resource is used to transmit a first positioning reference signal of the first communication apparatus.

Based on any one of the fifth aspect to the eighth aspect, in a first implementation of this application, a first time-frequency unit occupies one slot, half a slot, or a part of time domain symbols in one slot in time domain.

Based on any one of the fifth aspect to the eighth aspect or the first implementation, in a second implementation of this application, the first time domain symbol is a 1^{st} time domain symbol occupied by the first resource, and the second time domain symbol is a last time domain symbol or a second last time domain symbol occupied by the first resource.

Based on any one of the fifth aspect to the eighth aspect, the first implementation, or the second implementation, in a third implementation of this application, the first time domain symbol is an AGC symbol, and the first time domain symbol and the second time domain symbol are inconsecutive.

Based on any one of the fifth aspect to the eighth aspect or any one of the first implementation to the third implementation, in a fourth implementation of this application, the first resource occupies five, seven, nine, or 11 time domain symbols in time domain.

Based on any one of the fifth aspect to the eighth aspect or any one of the first implementation to the fourth implementation, in a fifth implementation of this application, a quantity of time domain symbols occupied by the first resource in time domain is 1 greater than a comb value corresponding to the first resource.

Based on any one of the fifth aspect to the eighth aspect or any one of the first implementation to the fourth implementation, in a sixth implementation of this application, the first resource occupies Y time domain symbols in time domain, a comb value corresponding to the first resource is X, and Y is equal to an integer multiple of X and plus 1.

Based on any one of the fifth aspect to the eighth aspect or any one of the first implementation to the fourth implementation, in a seventh implementation of this application, the first resource occupies Y time domain symbols in time domain, a comb value corresponding to the first resource is X, X is less than Y, and Y is not an integer multiple of X.

Based on any one of the fifth aspect to the eighth aspect or any one of the first implementation to the seventh implementation, in an eighth implementation of this application, the at least two time domain symbols further include a third time domain symbol, and the first resource occupies a same frequency domain resource on the third time domain symbol and the first time domain symbol.

Based on any one of the fifth aspect to the eighth aspect or any one of the first implementation to the seventh implementation, in a ninth implementation of this application, the at least two time domain symbols further include a fourth time domain symbol and a fifth time domain symbol, and the first resource occupies a same frequency domain resource on the fourth time domain symbol and the fifth time domain symbol.

Based on any one of the fifth aspect to the eighth aspect or any one of the first implementation to the ninth implementation, in a tenth implementation of this application, there is an equal frequency domain interval between any two adjacent sub-carriers.

Based on any one of the fifth aspect to the eighth aspect or any one of the first implementation to the tenth implementation, in an eleventh implementation of this application, a bandwidth occupied by the first resource in frequency domain is a resource pool bandwidth.

Based on the fifth aspect or any one of the first implementation to the eleventh implementation, in a twelfth implementation of this application, the transceiver module is further configured to:
receive first configuration information from a fourth communication apparatus. The first configuration information is used to configure the first resource, the first resource occupies Y time domain symbols in time domain, and a comb value corresponding to the first resource is X, where Y is equal to X plus 1, or Y is equal to an integer multiple of X and plus 1, or X is less than Y and Y is not an integer multiple of X.

The processing module is specifically configured to:
determine the first resource based on the first configuration information.

Based on the fifth aspect or any one of the first implementation to the eleventh implementation, in a thirteenth implementation of this application, the transceiver module is further configured to:
receive first indication information from a fourth communication apparatus. The first indication information indicates that the first resource occupies the same frequency domain resource on the first time domain symbol and the second time domain symbol.

The processing module is specifically configured to:
determine the first resource based on the first indication information.

Based on any one of the fifth aspect to the eighth aspect or any one of the first implementation to the thirteenth implementation, in a fourteenth implementation of this application, the first time-frequency unit further includes a second resource, the second resource is used to transmit a second positioning reference signal of a fifth communication apparatus, the second resource occupies at least two time domain symbols, the at least two time domain symbols include a sixth time domain symbol and a seventh time domain symbol, and the second resource occupies a same frequency domain resource on the sixth time domain symbol and the seventh time domain symbol. The first resource and the second resource occupy a same time domain resource, and frequency domain resources occupied by the first resource and the second resource on a same time domain symbol meets a frequency division multiplexing relationship; or the first resource and the second resource occupy different time domain resources.

For descriptions of beneficial effects shown in the fifth aspect, refer to the first aspect. Details are not described again. For descriptions of beneficial effects shown in the sixth aspect, refer to the second aspect. Details are not described again. For descriptions of beneficial effects shown in the seventh aspect, refer to the third aspect. Details are not described again. For descriptions of beneficial effects shown in the eighth aspect, refer to the fourth aspect. Details are not described again.

A ninth aspect of this application provides a communication apparatus. The communication apparatus includes a processor. The processor is configured to invoke and run a computer program stored in a memory, to enable the processor to implement any one of the implementations of the first aspect to the fourth aspect.

Optionally, the communication apparatus further includes a transceiver. The processor is further configured to control the transceiver to send and receive a signal.

Optionally, the communication apparatus includes the memory. The memory stores the computer program.

A tenth aspect of this application provides a computer program product including instructions, and when the computer program product is run on a computer, the computer is enabled to perform any implementation of any one of the first aspect to the fourth aspect.

An eleventh aspect of this application provides a computer-readable storage medium, including computer instructions, and when the computer instructions are run on a computer, the computer is enabled to perform any implementation of any one of the first aspect to the fourth aspect.

A twelfth aspect of this application provides a chip apparatus, including a processor, configured to: connect to a memory, and invoke a program stored in the memory, to enable the processor to perform any implementation of any one of the first aspect to the fourth aspect.

A thirteenth aspect of this application provides a communication system. The communication system includes the first communication apparatus according to the fifth aspect and the second communication apparatus according to the sixth aspect.

Optionally, the communication system further includes the fourth communication apparatus according to the seventh aspect or the fourth communication apparatus according to the eighth aspect.

According to the foregoing technical solutions, it can be learned that embodiments of this application have the following advantages.

It can be learned from the foregoing technical solutions that a first communication apparatus determines a first resource. The first resource is used to transmit a first positioning reference signal, the first resource occupies at least two time domain symbols, the at least two time domain symbols are located in a same slot, the at least two time domain symbols includes a first time domain symbol and a second time domain symbol, and the first resource occupies a same frequency domain resource on the first time domain symbol and the second time domain symbol. The first communication apparatus sends the first positioning reference signal to a second communication apparatus on the first resource. It can be learned that the first resource occupies the same frequency domain resource on the first time domain symbol and the second time domain symbol. This helps the second communication apparatus perform precise positioning on the first communication apparatus or the second communication apparatus, to improve positioning precision. For example, a Doppler shift between devices introduces consecutive phase changes in time domain. Therefore, the second communication apparatus may accurately estimate a Doppler shift between the first communication apparatus and the second communication apparatus by using a phase difference between a phase obtained by measuring a first positioning reference signal on the first time domain symbol and a phase obtained by measuring a first positioning reference signal on the second time domain symbol. Doppler shift estimation performance is improved. In this way, the second communication apparatus can compensate for, based on the Doppler shift, some multipath parameters obtained through measurement, and then perform precise positioning on the first communication apparatus or the second communication apparatus by using compensated multipath parameters. Therefore, the positioning precision is improved, and positioning performance is improved.

### BRIEF DESCRIPTION OF DRAWINGS

FIG. 1 is a diagram of a communication system according to an embodiment of this application;
FIG. 2 is another diagram of a communication system according to an embodiment of this application;
FIG. 3 is another diagram of a communication system according to an embodiment of this application;
FIG. 4 is another diagram of a communication system according to an embodiment of this application;
FIG. 5A is a diagram of a comb value according to an embodiment of this application;
FIG. 5B is a diagram of an embodiment of a communication method according to an embodiment of this application;
FIG. 6A is a diagram of a first resource according to an embodiment of this application;
FIG. 6B is another diagram of a first resource according to an embodiment of this application;
FIG. 6C is another diagram of a first resource according to an embodiment of this application;
FIG. 7A is another diagram of a first resource according to an embodiment of this application;
FIG. 7B is another diagram of a first resource according to an embodiment of this application;
FIG. 8A is another diagram of a first resource according to an embodiment of this application;
FIG. 8B is another diagram of a first resource according to an embodiment of this application;
FIG. 8C is another diagram of a first resource according to an embodiment of this application;
FIG. 8D is another diagram of a first resource according to an embodiment of this application;
FIG. 9A is another diagram of a first resource according to an embodiment of this application;
FIG. 9B is another diagram of a first resource according to an embodiment of this application;
FIG. 10A and FIG. 10B are a diagram of a first resource, a second resource, a third resource, and a fourth resource according to an embodiment of this application;
FIG. 11 is a diagram of a first resource and a second resource according to an embodiment of this application;
FIG. 12A is another diagram of a first resource and a second resource according to an embodiment of this application;
FIG. 12B is another diagram of a first resource and a second resource according to an embodiment of this application;
FIG. 12C is another diagram of a first resource and a second resource according to an embodiment of this application;
FIG. 13 is another diagram of a first resource according to an embodiment of this application;
FIG. 14 is a diagram of a structure of a first communication apparatus according to an embodiment of this application;
FIG. 15 is a diagram of a structure of a second communication apparatus according to an embodiment of this application;
FIG. 16 is a diagram of a structure of a fourth communication apparatus according to an embodiment of this application;
FIG. 17 is a diagram of a structure of a terminal device according to an embodiment of this application; and
FIG. 18 is a diagram of a structure of a communication apparatus according to an embodiment of this application.

### DESCRIPTION OF EMBODIMENTS

Embodiments of this application provide a communication method and a communication apparatus, to improve positioning precision and positioning performance.

The following clearly and completely describes technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "comprise", "include", "have", and their variants all mean "include but are not limited to", unless otherwise especially emphasized in another manner.

In descriptions of this application, unless otherwise specified, "/" means "or". For example, A/B may mean A or B. Aterm "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c. a, b, and c may be singular or plural.

The technical solutions of this application can be applied to various communication systems, for example, a 5th generation (5th generation, 5G) mobile communication system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system (for example, a 6G mobile communication system) later than a 5G network, a vehicle-to-everything (vehicle-to-everything, V2X) communication system, a device-to-device (device-to-device, D2D) communication system, and the like.

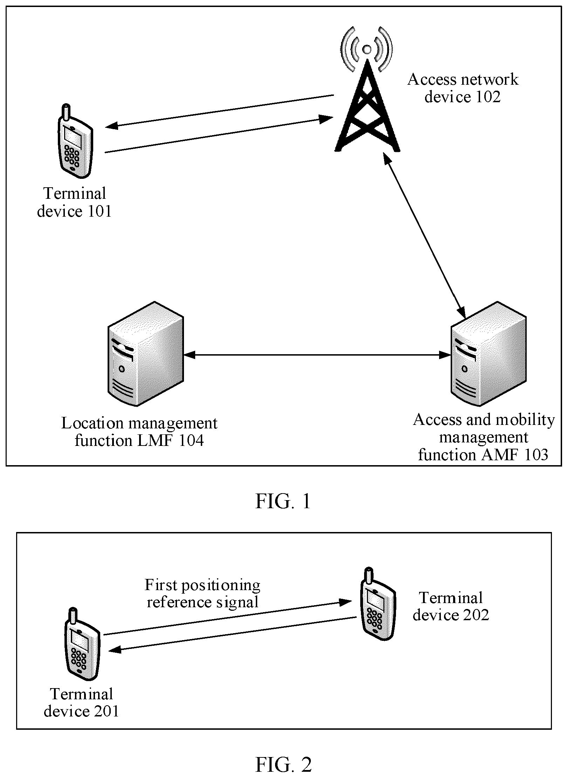

The following describes, with reference to FIG. 1 to FIG. 4, some scenarios to which this application is applicable.

FIG. 1 is a diagram of a communication system according to an embodiment of this application. Refer to FIG. 1. The communication system includes an access network device 102, an access and mobility management function (access and mobility management function, AMF) 103, and a location management function (location management function, LMF) 104.

Optionally, a terminal device 101 is connected to the access network device 102 through an interface, the access network device is connected to the AMF 103 through an interface, and the AMF 104 is connected to the LMF 104 through an interface. The LMF 104 is configured to perform positioning calculation and management for a position of the terminal device 101.

For example, the terminal device 101 is connected to the access network device 103 through an NR-Uu interface, and the access network device 102 is connected to the AMF 103 through an NG-C interface. The AMF 103 is connected to the LMF 104 through an NL1 interface. A technical solution of this application is performed between the terminal device 101 and the access network device 102, so that the LMF 104 positions the terminal device 101.

FIG. 1 shows only an example in which the communication system includes the access network device 102. However, in actual application, the communication system may further include more access network devices. This is not specifically limited in this application.

FIG. 2 is a diagram of another embodiment of a communication system according to an embodiment of this application. Refer to FIG. 2. The communication system includes a terminal device 201 and a terminal device 202. The terminal device 201 and the terminal device 202 are outside signal coverage of an access network device. The terminal device 201 communicates with the terminal device 202 through a proximity service communication (proximity service communication 5, PC5) interface. The terminal device 201 may position the terminal device 201 and/or the terminal device 202 by using technical solutions of this application.

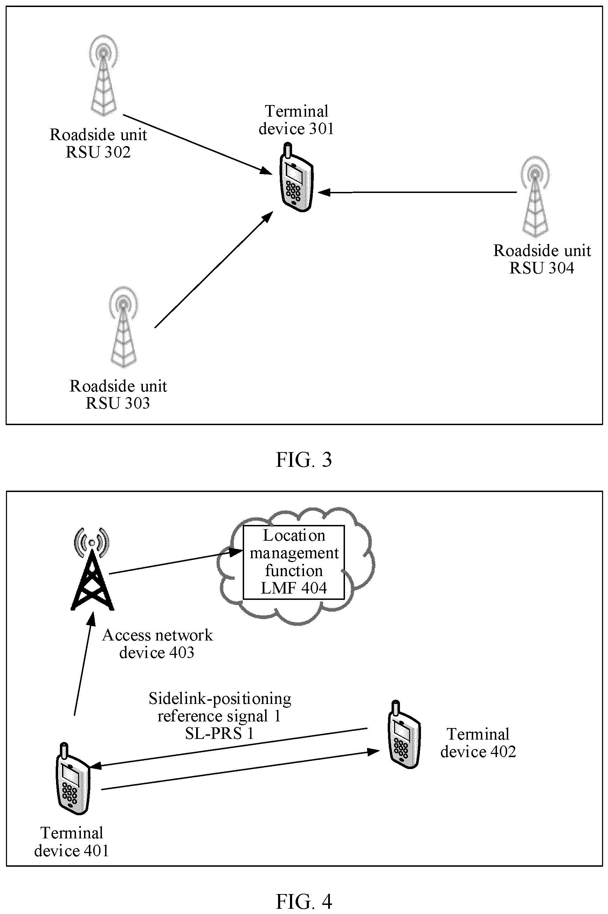

FIG. 3 is a diagram of another embodiment of a communication system according to an embodiment of this application. Refer to FIG. 3. The communication system includes a terminal device 301, a roadside unit RSU 302, an RSU 303, and an RSU 304. The terminal device 301, the RSU 302, and the RSU 304 are outside signal coverage of an access network device. As shown in FIG. 3, the terminal device 301 communicates with the RSU through a PC5 interface. The terminal device 301 and the RSU can position the terminal device 301 by using technical solutions of this application.

It should be noted that, in the communication system shown in FIG. 3, a form of the RSU is merely an example, and is not specifically limited to the RSU in this application.

It should be noted that the RSU is a roadside unit deployed on a roadside, supports sidelink communication and a positioning-related protocol, and can provide a wireless communication function for a terminal device. The RSU may be a roadside station, an access point, or a sidelink device in various forms. For an access network device, the RSU is a terminal device. For a terminal device, the RSU may serve as an access network device.

FIG. 4 is a diagram of another embodiment of a communication system according to an embodiment of this application. The communication system includes a terminal device 401, a terminal device 402, an access network device 403, and an LMF 404. The terminal device 401 is located in signal coverage of the access network device 403, and the terminal device 402 is not located in the signal coverage of the access network device 403. The terminal device 401 and the terminal device 402 may perform technical solutions of this application, and send a corresponding measurement result to the LMF 404 via the access network device 403, so that the LMF 404 positions the terminal device 401 and/or the terminal device 402.

In the communication systems shown in FIG. 1 and FIG. 4, the LMF is a name in a current communication system. In a future communication system, a name of the LMF may change with evolution of the communication system. The name of the LMF is not limited in this application. For example, the LMF may be referred to as a location management device, and the location management device is configured to perform positioning calculation for a position of the terminal device. In the current communication system or the future communication system, any functional network element that has another name and that has a function similar to that of the LMF may be understood as the location management device in embodiments of this application, and is applicable to the communication method provided in embodiments of this application.

The foregoing communication system to which this application is applicable is merely an example. In actual application, this application is further applicable to another communication system with a positioning requirement. This is not specifically limited in this application. The foregoing examples are not intended to limit the technical solutions of this application.

The following describes the terminal device and the access network device in this application.

The access network device is an apparatus deployed in a radio access network for providing a wireless communication function for the terminal device. The access network device may be a base station, and the base station is a macro base station, a micro base station (also referred to as a small cell), a relay station, an access point (access point, AP), a wearable device, a vehicle-mounted device, or the like in various forms. The base station may alternatively be a transmission and reception point (transmission and reception point, TRP), a transmission measurement function (transmission measurement function, TMF), or the like. For example, the base station in embodiments of this application may be a base station in new radio (new radio, NR). The base station in 5G new radio (new radio, NR) may also be referred to as a transmission reception point (transmission reception point, TRP), a transmission point (transmission point, TP), a next generation NodeB (next generation NodeB, ngNB), an evolved NodeB (evolved NodeB, eNB or eNodeB) in a long term evolution (long term evolution, LTE) system.

The terminal device may be a wireless terminal device that can receive scheduling and indication information of the access network device. The wireless terminal device may be a device that provides voice and/or data connectivity for a user, a handheld device with a wireless connection function, or another processing device connected to a wireless modem.

The terminal device is also referred to as user equipment (user equipment, UE), a mobile station (mobile station, MS), a mobile terminal (mobile terminal, MT), or the like, and is a device that includes a wireless communication function (providing voice/data connectivity for a user), for example, a handheld device or a vehicle-mounted device that has a wireless connection function. Currently, examples of some terminal devices are: a mobile phone (mobile phone), a tablet computer, a notebook computer, a palmtop computer, a train, a car, an uncrewed aerial vehicle, an airplane, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self driving (self driving), a wireless terminal in a smart grid (smart grid), and a wireless terminal in transportation safety (transportation safety), a wireless terminal in a smart city (smart city), and the like. For example, the wireless terminal in the internet of vehicles may be a vehicle-mounted device, an entire vehicle device, a vehicle-mounted module, a vehicle, or the like. The wireless terminal in the industrial control may be a robot, or the like.

In a positioning process, a positioning reference signal is transmitted between different communication apparatuses to position the communication apparatus. Due to movement of the communication apparatus, a Doppler shift is introduced in the positioning process, and positioning precision is affected by the Doppler shift, to cause low positioning precision. For example, in a V2X system, in a positioning process such as ranging or angle measurement between vehicles, a Doppler shift is introduced due to movement of the vehicle, and the positioning precision is affected. This application provides a corresponding technical solution, to improve the positioning precision and positioning performance. According to the technical solutions of this application, a second communication apparatus can accurately estimate the Doppler shift, to implement high-precision positioning.

The communication system to which this application is applicable includes a first communication apparatus and a second communication apparatus. Optionally, the communication system further includes a third communication apparatus, a fourth communication apparatus, and/or a fifth communication apparatus.

The following describes several possible implementations of the first communication apparatus and the second communication apparatus.

Implementation 1: The first communication apparatus is a first terminal device, and the second communication apparatus is a first access network device.

In the implementation 1, optionally, the communication system further includes the third communication apparatus, and the third communication apparatus may be a location management device.

In the implementation 1, optionally, the fourth communication apparatus and the second communication apparatus may be a same communication apparatus, in other words, the second communication apparatus may be an access network device.

In the implementation 1, optionally, the communication system further includes the fifth communication apparatus, and the fifth communication apparatus may be a second terminal device.

For example, as shown in FIG. 1, the first communication apparatus is a terminal device 101, the second communication apparatus and the fourth communication apparatus are the same communication apparatus, the second communication apparatus is an access network device 102, and the third communication apparatus is an LMF 104.

Implementation 2: The first communication apparatus is an access network device, and the second communication apparatus is a first terminal device.

In the implementation 2, optionally, the communication system further includes the third communication apparatus, and the third communication apparatus may be a location management device. Optionally, the communication system further includes the fifth communication apparatus, and the fifth communication apparatus may be a second terminal device.

For example, as shown in FIG. 1, the first communication apparatus is an access network device 102, the second communication apparatus is a terminal device 101, and the third communication apparatus is an LMF 104.

Implementation 3: The first communication apparatus is a first terminal device, and the second communication apparatus is a second terminal device.

In the implementation 3, optionally, the communication system further includes the fourth communication apparatus, and the fourth communication apparatus may be an access network device. Optionally, the communication system further includes the fifth communication apparatus, and the fifth communication apparatus may be a fourth terminal device.

In the implementation 3, optionally, the communication system further includes the third communication apparatus, and the third communication apparatus may be a location management device. Alternatively, the third communication apparatus and the fourth communication apparatus are a same communication apparatus, in other words, the third communication apparatus is an access network device.

For example, as shown in FIG. 4, the first communication apparatus is a terminal device 401, the second communication apparatus is a terminal device 402, the fourth communication apparatus is an access network device 403, and the third communication apparatus is an LMF 404.

Implementation 4: The first communication apparatus is a first terminal device, and the second communication apparatus is an RSU.

In the implementation 4, optionally, the fourth communication apparatus and the second communication apparatus are a same communication apparatus.

In the implementation 4, optionally, the communication system further includes the fifth communication apparatus, and the fifth communication apparatus may be a second terminal device. For example, as shown in FIG. 3, the first communication apparatus is a terminal device 301, the fourth communication apparatus and the second communication apparatus are the same communication apparatus, and the second communication apparatus is an RSU 302.

In the implementation 4, optionally, the communication system further includes the third communication apparatus. For example, the third communication apparatus is a location management device.

Implementation 5: The first communication apparatus is an RSU, and the second communication apparatus is a first terminal device.

In the implementation 5, optionally, the fourth communication apparatus and the first communication apparatus are a same communication apparatus. Optionally, the communication system further includes the fifth communication apparatus, and the fifth communication apparatus may be a second terminal device.

In the implementation 5, optionally, the communication system further includes the third communication apparatus. For example, the third communication apparatus is a location management device.

The implementations of the first communication apparatus to the fifth communication apparatus are merely some examples, and do not constitute a limitation on this application. The first communication apparatus to the fifth communication apparatus may further have other implementations. This is not specifically limited in this application.

The following describes technical terms in this application.

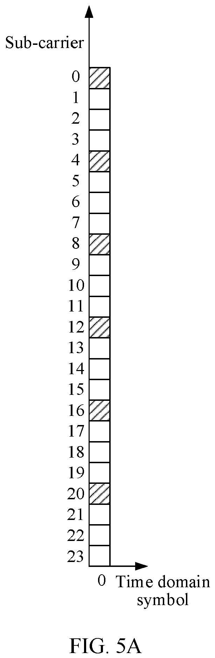

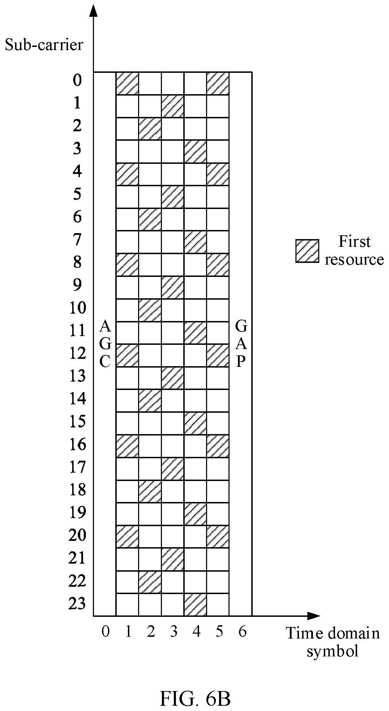

Comb value corresponding to a first resource: Generally, a comb value is a difference between indexes of any two adjacent sub-carriers in sub-carriers occupied by a resource on one time domain symbol, or a quantity of sub-carriers between any two adjacent sub-carriers in sub-carriers occupied by a resource on one time domain symbol plus 1. For example, as shown in FIG. 5A, the resource includes time-frequency resources represented by shadow parts in FIG. 5A. The resource occupies a sub-carrier 0, a sub-carrier 4, a sub-carrier 8, a sub-carrier 12, a sub-carrier 16, and a sub-carrier 20 on a time domain symbol 0. There are three sub-carriers between the sub-carrier 0 and the sub-carrier 4, and there are three sub-carriers between the sub-carrier 4 and the sub-carrier 8. By analogy, there are also three sub-carriers between the sub-carrier 16 and the sub-carrier 20. It can be learned that the comb value is 4. For the first resource, the first resource occupies at least two time domain symbols. The comb value corresponding to the first resource is a difference between indexes of any two adjacent sub-carriers in sub-carriers occupied by the first resource on each time domain symbol, or a quantity of sub-carriers between any two adjacent sub-carriers in sub-carriers occupied by the first resource on each time domain symbol plus 1. The first resource has a same comb value on each time domain symbol. The sub-carriers occupied by the first resource on each time domain symbol are evenly distributed or distributed at an equal interval. For example, as shown in FIG. 6B, the first resource includes shadow parts shown in FIG. 6B. The comb value of the first resource on each time domain symbol is 4.

The technical solutions of this application are described below with reference to specific embodiments.

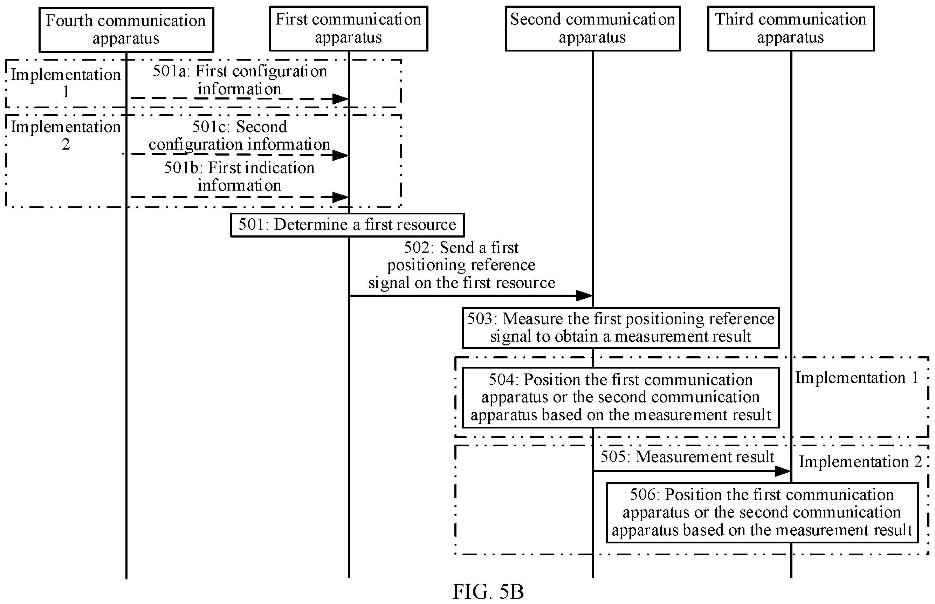

FIG. 5B is a diagram of an embodiment of a communication method according to an embodiment of this application. Refer to FIG. 5B. The communication method includes the following.

501: A first communication apparatus determines a first resource.

The first resource is used to transmit a first positioning reference signal. The first resource occupies at least two time domain symbols, and the at least two time domain symbols are located in a same slot. The at least two time domain symbols include a first time domain symbol and a second time domain symbol, and the first resource occupies a same frequency domain resource on the first time domain symbol and the second time domain symbol.

Optionally, in frequency domain, the first resource may occupy a bandwidth part (bandwidth part, BWP) configured in a communication system, may occupy a resource pool bandwidth, may occupy a part of a resource pool bandwidth, may occupy at least one resource block (resource block, RB), or the like. This is not specifically limited in this application.

Optionally, the bandwidth part is an operating bandwidth of the communication system, and the resource pool bandwidth is usually less than or equal to the bandwidth part.

Optionally, for the first communication apparatus, the first resource may be all resources used by the first communication apparatus to transmit the first positioning reference signal. Alternatively, for the first communication apparatus, more resources may further be configured to transmit the first positioning reference signal. In other words, the first resource may be a part of the resources used by the first communication apparatus to transmit the first positioning reference signal.

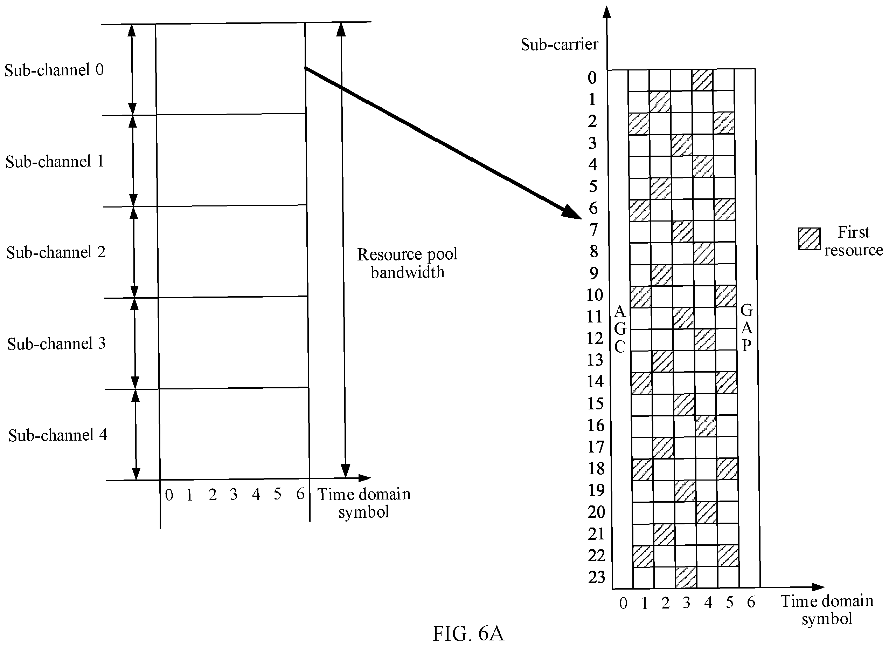

For example, as shown in FIG. 6A, in a sidelink (sidelink, SL) communication system, the resources used by the first communication apparatus to transmit the first positioning reference signal occupies the resource pool bandwidth in frequency domain, and the resource pool bandwidth includes a sub-channel 0 to a sub-channel 4. Each sub-channel occupies two RBs in frequency domain. Each RB includes 12 sub-carriers. The first resource occupies, in frequency domain, a bandwidth corresponding to the sub-channel 0. In other words, the first resource is the part of the resources used by the first communication apparatus to transmit the first positioning reference signal. The first resource occupies a time domain symbol 1 to a time domain symbol 5 in time domain. The first time domain symbol is the time domain symbol 1, and the second time domain symbol is the time domain symbol 5. As shown in FIG. 6A, the sub-channel 0 occupies a same frequency domain resource on the time domain symbol 1 and the time domain symbol 5, and specifically occupies a sub-carrier 2, a sub-carrier 6, a sub-carrier 10, a sub-carrier 14, a sub-carrier 18, and a sub-carrier 22. However, other sub-channels may occupy a same sub-carrier on the time domain symbol 1 and the time domain symbol 5, or may occupy different sub-carriers. This is not specifically limited in this application. In other words, in the resources used by the first communication apparatus to transmit the first positioning reference signal, in addition to the first resource, other resources may occupy a same frequency domain resource on the first time domain symbol and the second time domain symbol, or may occupy different frequency domain resources on the first time domain symbol and the second time domain symbol. This is not specifically limited in this application.

The foregoing example is described by using a sub-channel as an example. Actually, the first resource may be any bandwidth part in the resource pool bandwidth, and does not depend on a structure of the sub-channel. The following mainly uses an example in which the first resource is all the resources used by the first communication apparatus to transmit the first positioning reference signal for description.

Optionally, the first resource is located in a first time-frequency unit, and the first time-frequency unit occupies one slot, or half a slot, or a part of time domain symbols in one slot in time domain.

For example, in a sidelink positioning scenario, a time domain symbol occupied by each SL slot may be used for SL transmission. The first time-frequency unit may occupy the SL slot in time domain. For example, in the sidelink positioning scenario, one SL slot is divided into two sub-slots (sub-slots), and the first time-frequency unit occupies one sub-slot, that is, half a slot, in time domain. In actual application, it may be understood that the communication system allocates the sub-slot to the first communication apparatus for use.

It should be noted that a quantity of time domain symbols occupied by each sub-slot (or half a slot) should be determined with reference to a quantity of time domain symbols occupied by each SL slot. Specifically, the quantity of time domain symbols occupied by each sub-slot is not limited in this application. For example, if each SL slot occupies 14 time domain symbols, each sub-slot occupies seven time domain symbols. For example, if each SL slot occupies 11 time domain symbols, the SL slot is divided into two sub-slots, one sub-slot occupies five time domain symbols, and the other sub-slot occupies six time domain symbols.

For example, in the sidelink positioning scenario, five time domain symbols, seven time domain symbols, nine time domain symbols, or 11 time domain symbols in each SL slot may be used. In this case, the first time-frequency unit may be understood as a part of time domain symbols in the SL slot. Alternatively, a time domain symbol that is in each SL slot and that is configured for transmitting the first positioning reference signal may be understood as a time domain symbol occupied by the first time-frequency unit.

It should be noted that, in a part of time domain symbols in one slot occupied by the first time-frequency unit, the part of time domain symbols may be consecutive or may be inconsecutive. This is not specifically limited in this application.

It should be noted that a time domain symbol is used as a time domain unit for description in this specification. In actual application, the time domain unit may alternatively be a unit of another granularity. For example, two time domain symbols are used as one time domain unit, or half a time domain symbol is used as one time domain unit. This is not specifically limited in this application.

Optionally, the first time domain symbol is a 1^{st} time domain symbol occupied by the first resource, and the second time domain symbol is a last time domain symbol or a second last time domain symbol occupied by the first resource.

For example, as shown in FIG. 6B, the first resource occupies five time domain symbols: a time domain symbol 1 to a time domain symbol 5, respectively. Sub-carriers occupied by the first resource on the 1^{st} time domain symbol (that is, the time domain symbol 1) and the last time domain symbol (that is, the time domain symbol 5) are the same. As shown in FIG. 6B, sub-carriers occupied by the first resource on the time domain symbol 1 and the time domain symbol 5 are all a sub-carrier 0, a sub-carrier 4, a sub-carrier 8, a sub-carrier 12, a sub-carrier 16, and a sub-carrier 20.

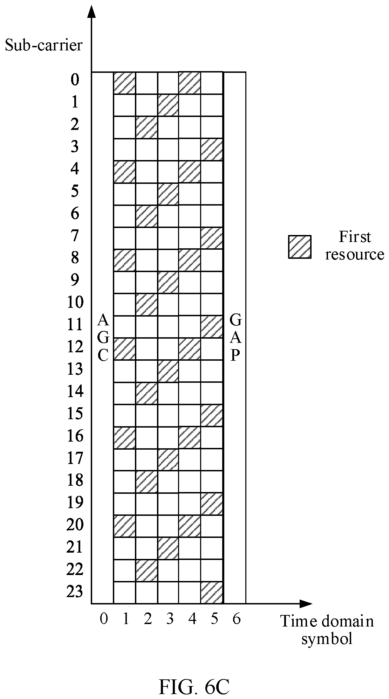

For example, as shown in FIG. 6C, the first resource occupies five time domain symbols: a time domain symbol 1 to a time domain symbol 5, respectively. Sub-carriers occupied by the first resource on the 1^{st} time domain symbol (that is, the time domain symbol 1) and the second last time domain symbol (that is, the time domain symbol 4) are the same. As shown in FIG. 6C, sub-carriers occupied by the first resource on the time domain symbol 1 and the time domain symbol 4 are all a sub-carrier 0, a sub-carrier 4, a sub-carrier 8, a sub-carrier 12, a sub-carrier 16, and a sub-carrier 20.

A second communication apparatus may measure a first positioning reference signal received on the first time domain symbol to obtain a first phase, and measure a first positioning reference signal received on the second time domain symbol to obtain a second phase. The second communication apparatus may estimate a Doppler shift between the first communication apparatus and the second communication apparatus by using a phase difference between the first phase and the second phase.

A Doppler shift between devices introduces consecutive phase changes in time domain. Therefore, the implementations shown above help the second communication apparatus precisely determine the Doppler shift between the first communication apparatus and the second communication apparatus. In other words, the second communication apparatus may estimate the Doppler shift by using the phase difference between the first phase obtained by measuring the first positioning reference signal on the first time domain symbol and the second phase obtained by measuring the first positioning reference signal on the second time domain symbol. However, because an interval between the first time domain symbol and the second time domain symbol is large, the phase difference is also large. In this way, the second communication apparatus can accurately estimate the Doppler shift based on the phase difference, to ensure precision of the Doppler shift.

Optionally, the first time domain symbol is an AGC symbol, and the first time domain symbol and the second time domain symbol are inconsecutive.

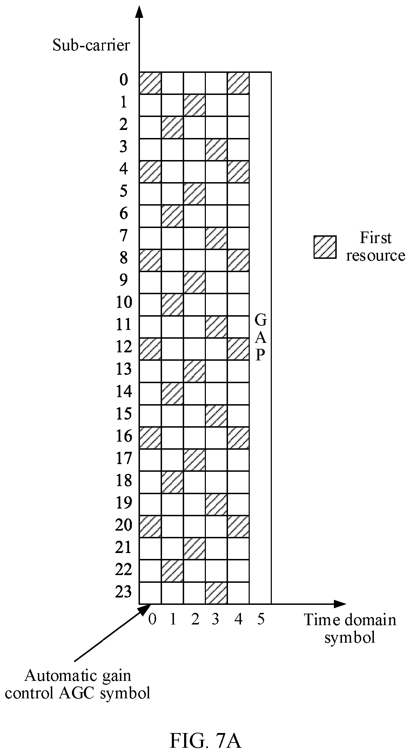

For example, as shown in FIG. 7A, the first resource occupies five time domain symbols: a time domain symbol 0 to a time domain symbol 4, respectively. Sub-carriers occupied by the first resource on the 1^{st} time domain symbol (that is, the time domain symbol 0) and the last time domain symbol (that is, the time domain symbol 4) are the same. As shown in FIG. 7A, sub-carriers occupied by the first resource on the time domain symbol 0 and the time domain symbol 4 are all a sub-carrier 0, a sub-carrier 4, a sub-carrier 8, a sub-carrier 12, a sub-carrier 16, and a sub-carrier 20. Further, the time domain symbol 1 is further used as an AGC symbol.

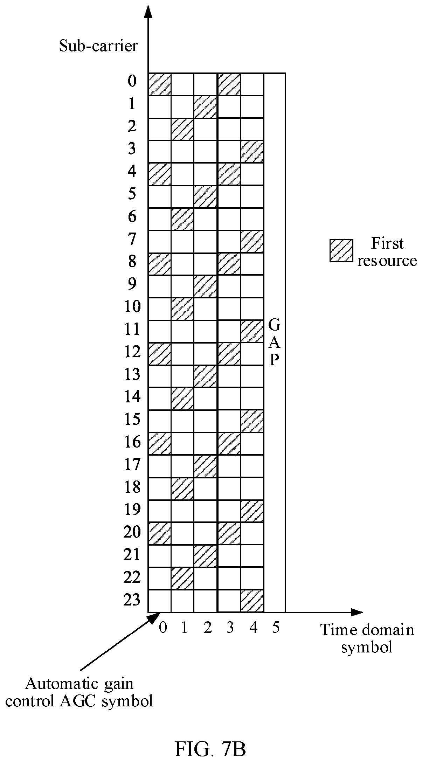

For example, as shown in FIG. 7B, the first resource occupies five time domain symbols: a time domain symbol 0 to a time domain symbol 4, respectively. Sub-carriers occupied by the first resource on the 1^{st} time domain symbol (that is, the time domain symbol 0) and the second last time domain symbol (that is, the time domain symbol 3) are the same. As shown in FIG. 7B, sub-carriers occupied by the first resource on the time domain symbol 0 and the time domain symbol 4 are all a sub-carrier 0, a sub-carrier 4, a sub-carrier 8, a sub-carrier 12, a sub-carrier 16, and a sub-carrier 20. Further, the time domain symbol 1 is further used as an AGC symbol.

Optionally, the first resource occupies five, seven, nine, or 11 time domain symbols in time domain.

For example, as shown in FIG. 6B, the first resource occupies five consecutive time domain symbols in time domain. In the example shown in FIG. 6B, in an SL positioning scenario, the communication system configures that seven time domain symbols in one SL slot are available. Specifically, the time domain symbol 1 to a time domain symbol 7 shown in FIG. 6B are used. A time domain symbol 0 is an AGC symbol, and the time domain symbol 1 to the time domain symbol 5 are five consecutive time domain symbols occupied by the first resource. The time domain symbol 6 is a GAP symbol.

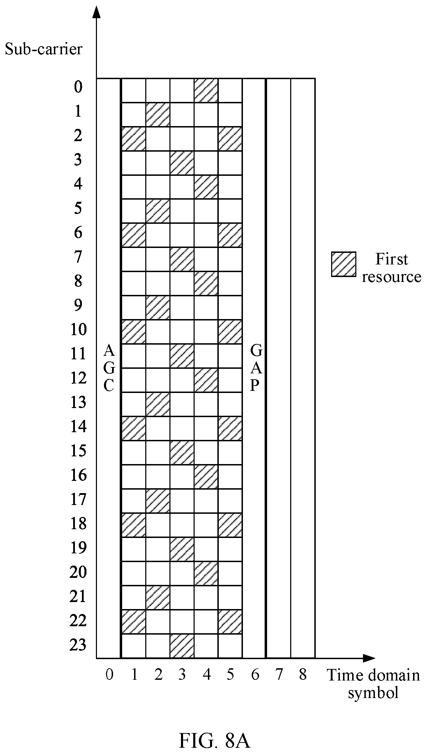

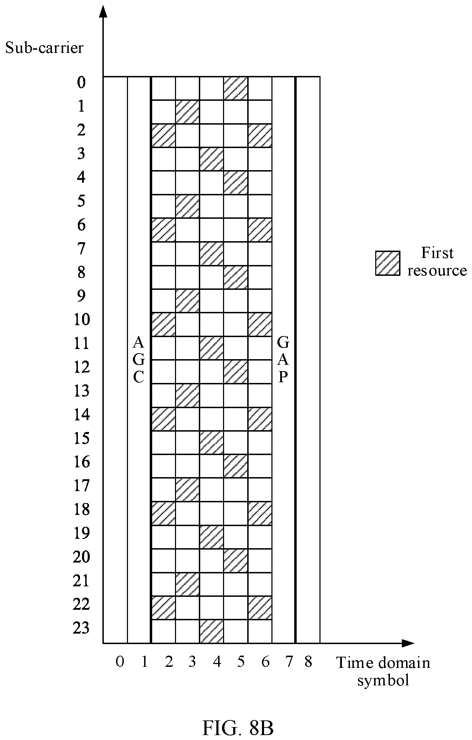

For example, as shown in FIG. 8A or FIG. 8B, the first resource occupies five consecutive time domain symbols in time domain. In the example shown in FIG. 8A, in the SL positioning scenario, the communication system configures that nine time domain symbols in one SL slot are available. In a possible implementation, as shown in FIG. 8A, a time domain symbol 0 is an AGC symbol, and a time domain symbol 1 to a time domain symbol 5 are five consecutive time domain symbols occupied by the first resource. A time domain symbol 6 is a GAP symbol. A time domain symbol 7 and a time domain symbol 8 are left blank. In another possible implementation, as shown in FIG. 8B, a time domain symbol 0 and a time domain symbol 8 are left blank, a time domain symbol 1 is an AGC symbol, a time domain symbol 2 to a time domain symbol 6 are five consecutive time domain symbols occupied by the first resource, and a time domain symbol 7 is a GAP symbol.

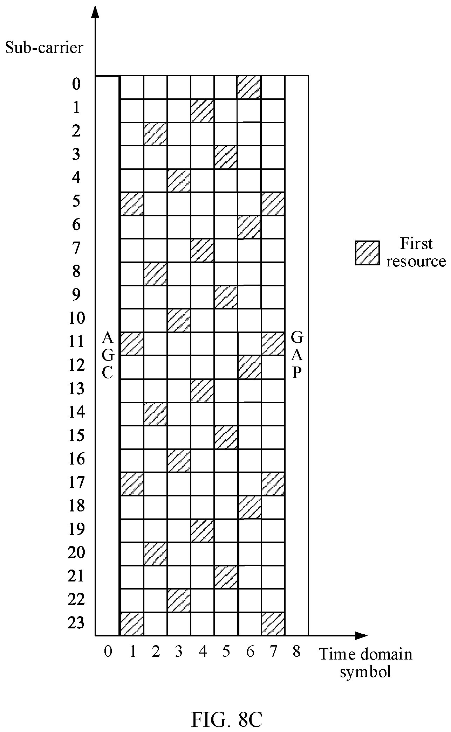

For example, as shown in FIG. 8C, the first resource occupies seven consecutive time domain symbols in time domain. In the example shown in FIG. 8C, in the SL positioning scenario, the communication system configures that nine time domain symbols in one SL slot are available. As shown in FIG. 8C, a time domain symbol 0 is an AGC symbol, a time domain symbol 1 to a time domain symbol 7 are seven consecutive time domain symbols occupied by the first resource, and a time domain symbol 8 is a GAP symbol.

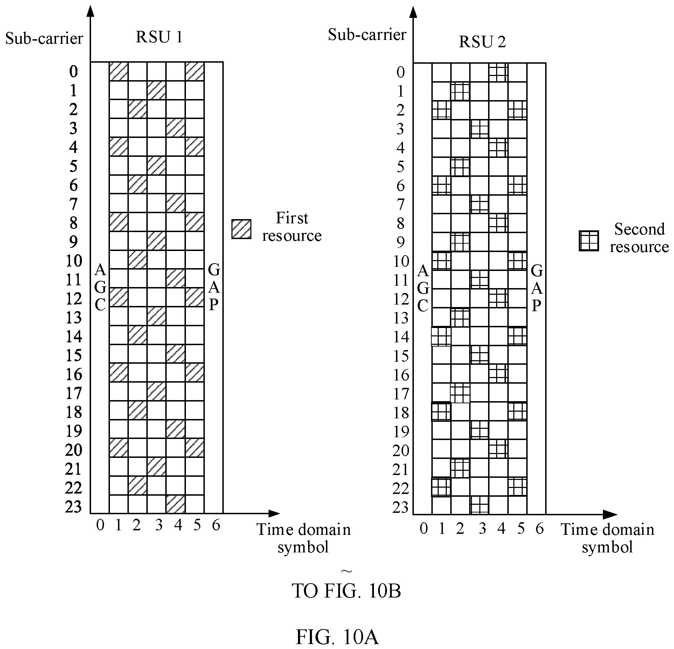

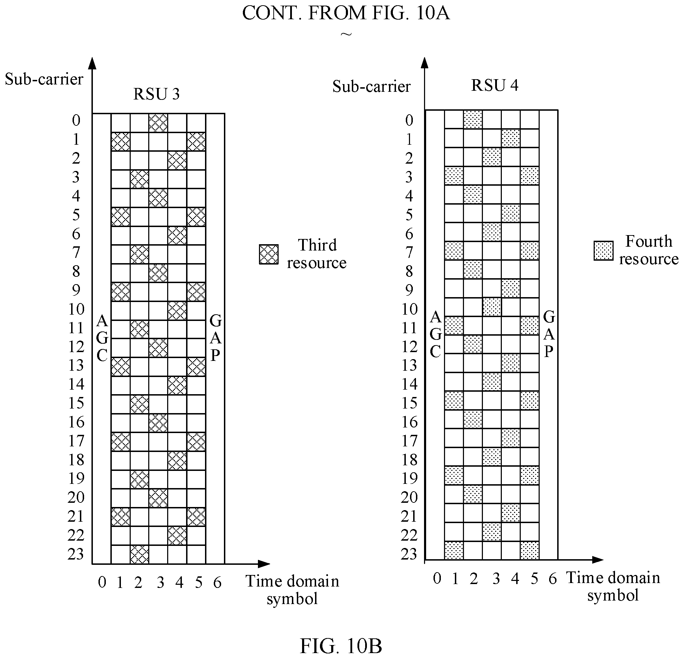

It can be learned that a comb value corresponding to the first resource and the time domain symbol occupied by the first resource are related to a quantity of available time domain symbols in one slot. A position of the first resource may be configured in one time domain symbol, to achieve more flexible configuration. When the first resource occupies a large quantity of time domain symbols, the comb value corresponding to the first resource may be set to a large value, to help increase a multiplexing capacity in one slot. For example, as shown in FIG. 10A and FIG. 10B, if the comb value corresponding to the first resource is 4, frequency domain resources occupied by a time domain symbol 1 to a time domain symbol 5 in a slot may be multiplexed by four RSUs, so that the multiplexing capacity is improved.

Optionally, in sub-carriers occupied by the first resource on any one of the at least two time domain symbols, there is an equal frequency domain interval between any two adjacent sub-carriers.

For example, as shown in FIG. 6B, the first resource occupies the sub-carrier 0, the sub-carrier 4, the sub-carrier 8, the sub-carrier 12, the sub-carrier 16, and the sub-carrier 20 on the time domain symbol 1. The sub-carrier 0 is adjacent to the sub-carrier 4, and the sub-carrier 4 is adjacent to the sub-carrier 8. There are three sub-carriers between the sub-carrier 0 and the sub-carrier 4, and there are also three sub-carriers between the sub-carrier 4 and the sub-carrier 8. This is also applicable to any other two adjacent sub-carriers. It can be learned that any two adjacent sub-carriers are spaced by an equal quantity of sub-carriers.

The following describes the comb value corresponding to the first resource.

For example, as shown in FIG. 6B, the first resource occupies the sub-carrier 0, the sub-carrier 4, the sub-carrier 8, the sub-carrier 12, the sub-carrier 16, and the sub-carrier 20 on the time domain symbol 1. The sub-carrier 0 is adjacent to the sub-carrier 4, and the sub-carrier 4 is adjacent to the sub-carrier 8. By analogy, the sub-carrier 16 is adjacent to the sub-carrier 20. There are three sub-carriers between the sub-carrier 0 and the sub-carrier 4, and there are also three sub-carriers between the sub-carrier 4 and the sub-carrier 8. By analogy, there are also three sub-carriers between the sub-carrier 16 and the sub-carrier 20. This is also applied to adjacent sub-carriers in sub-carriers occupied by the first resource on another time domain symbol. It can be learned that the comb value corresponding to the first resource is 4. Similarly, for example, as shown in FIG. 8C, the comb value corresponding to the first resource is 6.

In this implementation, there is an equal frequency domain interval between any two adjacent sub-carriers of the first resource on a same time domain symbol. This helps implement multi-user multiplexing of a time-frequency resource and improve a multiplexing capacity in a slot. For details, refer to the following related descriptions of a relationship between positions of the first resource and the second resource.

The following describes some possible implementations of the first resource.
1. A quantity of time domain symbols occupied by the first resource in time domain is 1 greater than the comb value corresponding to the first resource.
   For example, as shown in FIG. 6B, the first resource occupies five time domain symbols in time domain, and the comb value corresponding to the first resource is 4. It can be learned that the quantity of time domain symbols is 1 greater than the comb value corresponding to the first resource. This helps the first communication apparatus set that the first resource occupies the same frequency domain resource on the first time domain symbol and the second time domain symbol.
2. The first resource occupies Y time domain symbols in time domain, the comb value corresponding to the first resource is X, and X is equal to an integer multiple of Y and plus 1.

Both X and Y are integers greater than or equal to 1.

For example, as shown in FIG. 8C, the first resource occupies seven time domain symbols in time domain, and the comb value corresponding to the first resource is 6. It can be learned that the quantity of time domain symbols is 1 greater than the comb value corresponding to the first resource.

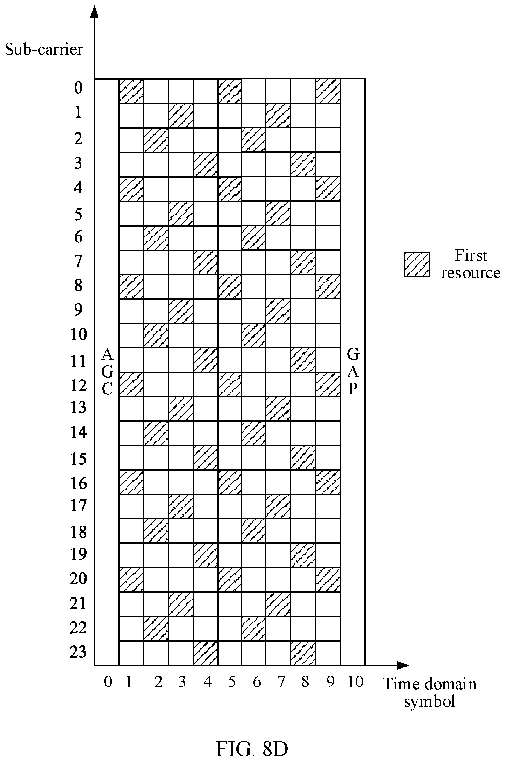

For example, as shown in FIG. 8D, the first resource occupies nine time domain symbols in time domain, and the comb value corresponding to the first resource is 4. It can be learned that the quantity of time domain symbols is twice the comb value corresponding to the first resource plus 1.

3. The first resource occupies Y time domain symbols in time domain, and the comb value corresponding to the first resource is X, X is less than Y, and Y is not an integer multiple of X. Both X and Y are integers greater than or equal to 1.

For example, as shown in FIG. 8D, the first resource occupies nine time domain symbols in time domain, and the comb value corresponding to the first resource is 4. It can be learned that the quantity of time domain symbols is greater than the comb value corresponding to the first resource, and the quantity of time domain symbols is not an integer multiple of the comb value corresponding to the first resource.

In a possible implementation, the at least two time domain symbols further include a third time domain symbol, and the first resource occupies a same frequency domain resource on the third time domain symbol and the first time domain symbol.

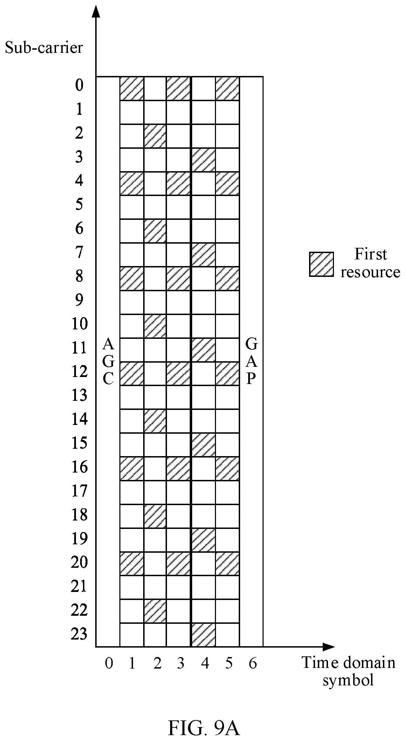

For example, as shown in FIG. 9A, the first resource occupies a time domain symbol 1 to a time domain symbol 5. The first time domain symbol is a 1^{st} time domain symbol (that is, the time domain symbol 1) occupied by the first resource. The second time domain symbol is a last time domain symbol (that is, the time domain symbol 5) occupied by the first resource. The third time domain symbol is a 3^{rd} time domain symbol (that is, the time domain symbol 3) occupied by the first resource. It can be learned from FIG. 9A that the first resource occupies a same sub-carrier on the time domain symbol 1, the time domain symbol 3, and the time domain symbol 5.

It should be noted that, in this application, in the time domain symbols occupied by the first resource, a same frequency domain resource is occupied on at least two time domain symbols. The foregoing describes the technical solutions of this application by using the first time domain symbol, the second time domain symbol, and the third time domain symbol as examples, and does not constitute a limitation on this application.

It can be learned that, in this implementation, the first resource occupies a same frequency domain resource on three time domain symbols, so that the second communication apparatus can precisely determine the Doppler shift between the first communication apparatus and the second communication apparatus.

In another possible implementation, the at least two time domain symbols further include a fourth time domain symbol and a fifth time domain symbol, and the first resource occupies a same frequency domain resource on the fourth time domain symbol and the fifth time domain symbol.

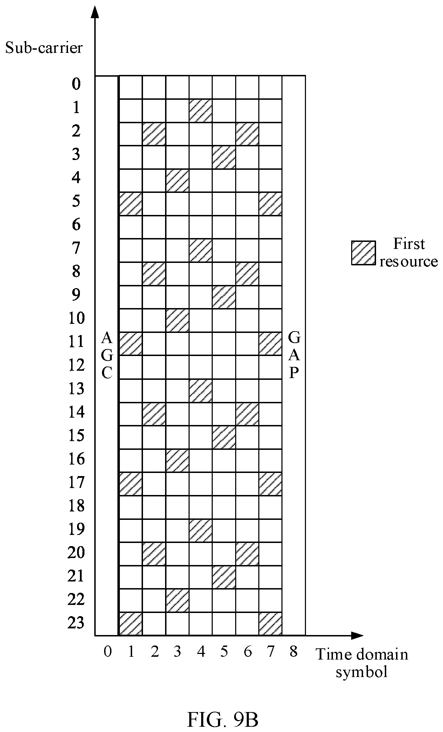

For example, as shown in FIG. 9B, the first resource occupies a time domain symbol 1 to a time domain symbol 7. The first time domain symbol is a 1^{st} time domain symbol (that is, the time domain symbol 1) occupied by the first resource. The second time domain symbol is a last time domain symbol (that is, the time domain symbol 7) occupied by the first resource. The fourth time domain symbol is a 2^{nd} time domain symbol (that is, the time domain symbol 2) occupied by the first resource, and the fifth time domain symbol is a second last time domain symbol (that is, the time domain symbol 6) occupied by the first resource. It can be learned from FIG. 9B that the first resource occupies a same sub-carrier on the time domain symbol 1 and the time domain symbol 7. The first resource occupies a same sub-carrier on the time domain symbol 2 and the time domain symbol 6.

It can be learned that, in this implementation, the first resource occupies the same frequency domain resource on the first time domain symbol and the second time domain symbol, and the first resource occupies the same frequency domain resource on the fourth time domain symbol and the fifth time domain symbol. This helps the second communication apparatus precisely determine the Doppler shift between the first communication apparatus and the second communication apparatus.

Optionally, the first time-frequency unit further includes a second resource. The second resource is used to transmit a second positioning reference signal of a fifth communication apparatus. The second resource occupies at least two time domain symbols, the at least two time domain symbols include a sixth time domain symbol and a seventh time domain symbol, and the second resource occupies a same frequency domain resource on the sixth time domain symbol and the seventh time domain symbol.

For example, as shown in FIG. 10A and FIG. 10B, the first communication apparatus is an RSU 1, and the fifth communication apparatus is an RSU 2. The first resource occupies the time domain symbol 1 to the time domain symbol 5, the sixth time domain symbol is the time domain symbol 1, and the seventh time domain symbol is the time domain symbol 5. The second resource occupies a same sub-carrier on the time domain symbol 1 and the time domain symbol 5.

Optionally, the sixth time domain symbol is a 1^{st} time domain symbol occupied by the second resource, and the seventh time domain symbol is a last time domain symbol or a second last time domain symbol occupied by the second resource.

Optionally, the sixth time domain symbol is an AGC symbol, and the sixth time domain symbol and the seventh time domain symbol are inconsecutive.

The sixth time domain symbol and the seventh time domain symbol are similar to the first time domain symbol and the second time domain symbol. For details, refer to the related descriptions of the first time domain symbol and the second time domain symbol of the first resource.

Optionally, the at least two time domain symbols occupied by the second resource further include an eighth time domain symbol, and the second resource occupies a same frequency domain resource on the sixth time domain symbol and the eighth time domain symbol. The eighth time domain symbol is similar to the third time domain symbol. For details, refer to the related descriptions of the third time domain symbol occupied by the first resource.

Optionally, the at least two time domain symbols occupied by the second resource further include a ninth time domain symbol and a tenth time domain symbol. The second resource occupies a same frequency domain resource on the ninth time domain symbol and the tenth time domain symbol. The ninth time domain symbol and the tenth time domain symbol are similar to the fourth time domain symbol and the fifth time domain symbol. For details, refer to the related descriptions of the ninth time domain symbol and the tenth time domain symbol.

For a relationship between a quantity of time domain symbols occupied by the second resource and a comb value corresponding to the second resource, refer to the related descriptions of the first resource. Details are not described herein again.

The following describes some possible implementations of time-frequency positions occupied by the first resource and the second resource.

Implementation 1: The first resource and the second resource occupy a same frequency domain resource, and frequency domain resources occupied by the first resource and the second resource on the same time domain symbol may meet a frequency division multiplexing relationship.

For example, as shown in FIG. 10A and FIG. 10B, the first communication apparatus is an RSU 1, the second communication apparatus is a terminal device, and the fifth communication apparatus is an RSU 2. For example, the RSU 1 shown in FIG. 10A and FIG. 10B transmits the first positioning reference signal by using the first resource. The RSU 2 transmits the second positioning reference signal by using the second resource. It can be learned from FIG. 10A and FIG. 10B that both the first resource and the second resource occupy the time domain symbol 1 to the time domain symbol 5 in time domain, and on a same time domain symbol in these time domain symbols, the first resource and the second resource occupy different sub-carriers. In other words, sub-carriers occupied by the first resource and the second resource on the same time domain symbol meet the frequency division multiplexing relationship.

Optionally, in a process of positioning the terminal device, precise positioning may be further implemented with reference to first positioning reference signals sent by more RSUs. As shown in FIG. 10A and FIG. 10B, an RSU 3 transmits a third positioning reference signal by using a third resource, and an RSU 4 transmits a fourth positioning reference signal by using a fourth resource. It can be learned from FIG. 10A and FIG. 10B that the first resource, the second resource, the third resource, and the fourth resource all occupy the time domain symbol 1 to the time domain symbol 5 in time domain. On a same time domain symbol in these time domain symbols, the first resource, the second resource, the third resource, and the fourth resource occupy different sub-carriers. In other words, sub-carriers occupied by the first resource, the second resource, the third resource, and the fourth resource on the same time domain symbol meet the frequency division multiplexing relationship. This can resolve a problem that it is difficult to implement multi-user multiplexing when users are scheduled in a unit of a slot in a sidelink communication system.

It can be learned from FIG. 10A and FIG. 10B that frequency domain offsets (that is, quantities of sub-carriers offset relative to the sub-carrier 0) corresponding to the first resource on the time domain symbol 1 to the time domain symbol 5 are 0, 2, 1, 3, and 0 respectively. Frequency domain offsets corresponding to the second resource on the time domain symbol 2 to the time domain symbol 6 are 2, 1, 3, 0, and 2 respectively. Frequency domain offsets corresponding to the third resource on the time domain symbol 2 to the time domain symbol 6 are 1, 3, 0, 2, and 1 respectively. Frequency domain offsets corresponding to the fourth resource on the time domain symbol 2 to the time domain symbol 6 are 3, 0, 2, 1, and 3 respectively. Different RSUs implement resource orthogonality in frequency domain by using different frequency domain offsets, to improve a multiplexing capacity of a plurality of users in a slot. In this way, a plurality of RSUs multiplex a same slot, to avoid impact of different RSUs on positioning precision due to clock drift.

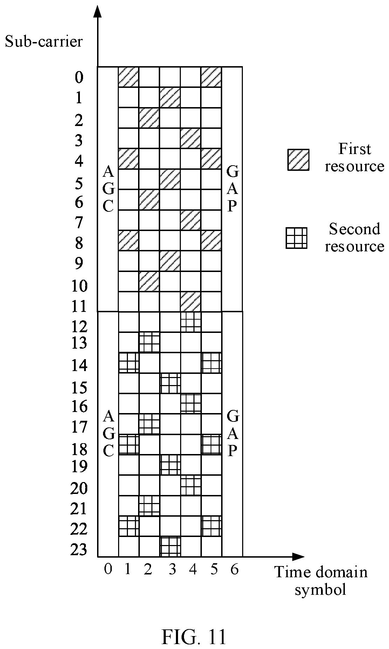

For example, as shown in FIG. 11, the first communication apparatus is an RSU 1, and the fifth communication apparatus is an RSU 2. For example, the RSU 1 shown in FIG. 11 transmits the first positioning reference signal by using the first resource. The RSU 2 transmits the second positioning reference signal by using the second resource. It can be learned from FIG. 11 that both the first resource and the second resource occupy the time domain symbol 1 to the time domain symbol 5 in time domain, and on a same time domain symbol in these time domain symbols, the first resource and the second resource occupy different sub-carriers. For example, as shown in FIG. 11, the first resource occupies a sub-carrier 0, a sub-carrier 4, and a sub-carrier 8 on a time domain symbol 1. However, the second resource occupies a sub-carrier 14, a sub-carrier 18, and a sub-carrier 22 on the time domain symbol 1. This is also applied to other time domain symbols. In other words, sub-carriers occupied by the first resource and the second resource on the same time domain symbol meet the frequency division multiplexing relationship. For example, in a positioning method based on an angle of arrival or an angle of departure of the first positioning reference signal, angle measurement does not require that the first positioning reference signal occupies a large bandwidth, in other words, precision of the angle measurement is not affected. Therefore, the first resource and the second resource may separately occupy bandwidth parts in the resource pool bandwidth. In this way, resource utilization is improved. This can resolve the problem that it is difficult to implement multi-user multiplexing when users are scheduled in a unit of a slot in the sidelink communication system.

The foregoing solution is applicable to a scenario in which a quantity of time domain symbols occupied by a system resource is less than 14. For example, in the sidelink communication system, time domain symbols occupied by one SL slot are less than 14.

Implementation 2: The first resource and the second resource occupy different time domain resources.

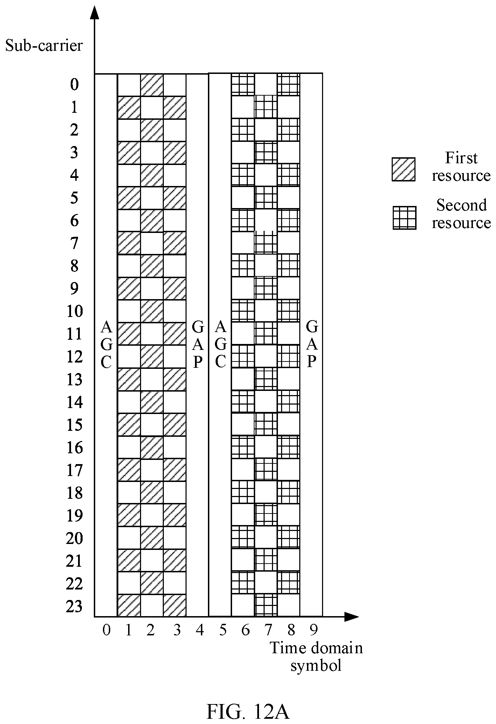

For example, as shown in FIG. 12A, the first resource occupies a time domain symbol 1 to a time domain symbol 3, and the second resource occupies a time domain symbol 6 to a time domain symbol 8.

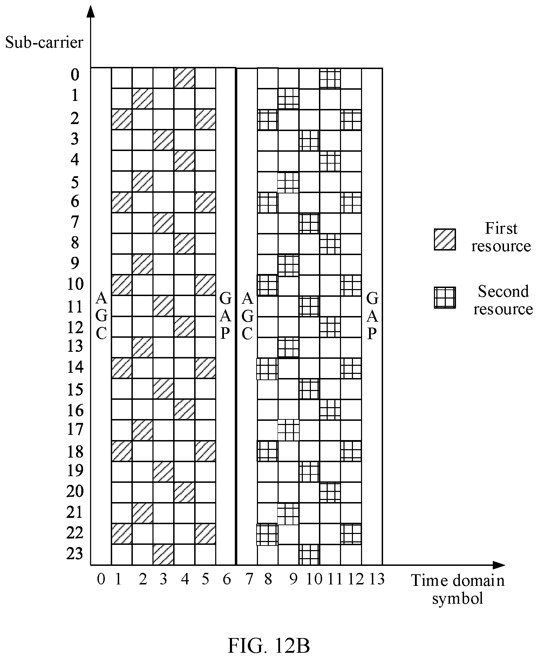

For example, as shown in FIG. 12B, the first resource occupies a time domain symbol 1 to a time domain symbol 5. The second resource occupies a time domain symbol 8 to a time domain symbol 12.

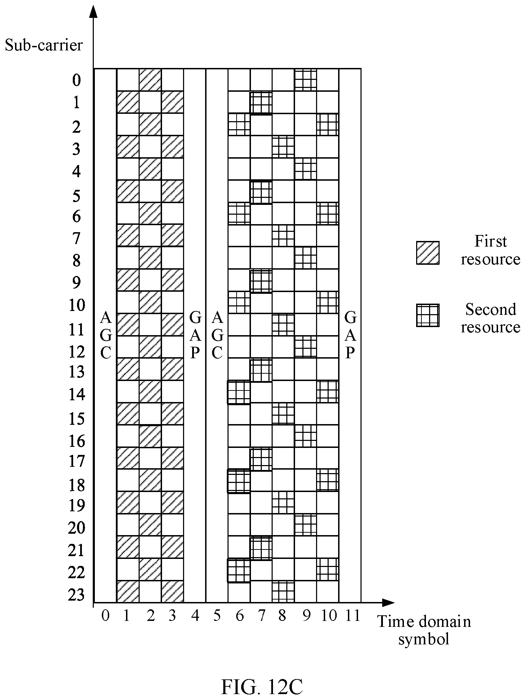

For example, as shown in FIG. 12C, the first resource occupies a time domain symbol 1 to a time domain symbol 3. The second resource occupies a time domain symbol 6 to a time domain symbol 10.

It can be learned that, in the foregoing examples, the first resource and the second resource occupy different time domain symbols. However, the first resource and the second resource may occupy a same sub-carrier in frequency domain.

In the foregoing examples, a time domain symbol included in a horizontal coordinate may be understood as a time domain symbol included in one slot. In other words, one slot is divided into resources of a smaller granularity. Through such resource division, a multiplexing capability in time domain can be additionally provided, interference between a plurality of users is avoided, and the positioning precision is improved. Different users occupy different time domain resources, so that a multiplexing capability of the plurality of users in a single slot in time domain is implemented. This can resolve the problem that it is difficult to implement multi-user multiplexing when users are scheduled in a unit of a slot in the sidelink communication system.

Optionally, quantities of time domain symbols occupied by the first resource and the second resource may be the same or may be different. This is not specifically limited in this application.

For example, as shown in FIG. 12A, the first resource and the second resource each occupy three time domain symbols, in other words, the first resource and the second resource each occupy a same quantity of time domain symbols.

For example, as shown in FIG. 12C, the first resource occupies three time domain symbols, and the second resource occupies five time domain symbols. In other words, the first resource and the second resource each occupy the same quantity of time domain symbols.

Optionally, the comb value corresponding to the first resource and the comb value corresponding to the second resource may be the same or different. This is not specifically limited in this application.

For example, as shown in FIG. 12A, both the comb value corresponding to the first resource and the comb value corresponding to the second resource are 2. In other words, the first resource and the second resource each correspond to a same comb value.

For example, as shown in FIG. 12C, the comb value corresponding to the first resource is 2, and the comb value corresponding to the second resource is 4. In other words, the first resource and the second resource each correspond to a different comb value.

Optionally, a bandwidth occupied by the first resource in frequency domain is a resource pool bandwidth. For example, in an SL communication system, one bandwidth part (bandwidth part, BWP) includes at least one resource pool bandwidth, and the bandwidth occupied by the first resource in frequency domain may be one of resource pool bandwidths.

For example, as shown in FIG. 6B, the resource pool bandwidth includes a frequency domain bandwidth between the sub-carrier 0 and a sub-carrier 23. The bandwidth occupied by the first resource in frequency domain may be understood as the resource pool bandwidth.

Optionally, the first resource occupies a part of the resource pool bandwidth in frequency domain, and the second resource occupies the other part of the resource pool bandwidth in frequency domain.

For example, as shown in FIG. 11, the resource pool bandwidth includes the frequency domain bandwidth between the sub-carrier 0 and a sub-carrier 23. The bandwidth occupied by the first resource in frequency domain may be understood as a half of the resource pool bandwidth, and a bandwidth occupied by the second resource in frequency domain may be understood as the other half of the resource pool bandwidth.

Optionally, the first resource may be determined by the first communication apparatus, or may be configured by the fourth communication apparatus for the first communication apparatus. This is not specifically limited in this application.

For example, the first communication apparatus configures the first resource, so that the first resource occupies the same frequency domain resource on the first time domain symbol and the second time domain symbol.

For example, the first communication apparatus is a base station, the second communication apparatus is a terminal device, and the base station may configure the first resource. Further, optionally, the base station may further send a related configuration of the first resource to the terminal device. In this way, the terminal device receives, on the first resource, the first positioning reference signal sent by the base station.

When the fourth communication apparatus configures the first resource for the first communication apparatus, the fourth communication apparatus configures the first resource for the first communication apparatus in the following two possible implementations, so that the first resource occupies the same frequency domain resource on the first time domain symbol and the second time domain symbol. This is also applicable to another implementation. This is not specifically limited in this application.

The following describes Implementation 1 with reference to step 501a.

Optionally, the embodiment shown in FIG. 5B further includes step 501a. Step 501a may be performed before step 501.

501a: The fourth communication apparatus sends first configuration information to the first communication apparatus. Correspondingly, the first communication apparatus receives the first configuration information from the fourth communication apparatus.

The first configuration information is used to configure the first resource for the first communication apparatus, and the first resource occupies Y time domain symbols in time domain. The comb value corresponding to the first resource is X. Y is equal to X plus 1; or Y is equal to an integer multiple of X and plus 1; or X is less than Y and Y is not an integer multiple of X.

For several possible relationships between the quantity of time domain symbols occupied by the first resource and the comb value corresponding to the first resource, refer to the related descriptions. Details are not described herein again.

Optionally, the first communication apparatus is a terminal device, and the second communication apparatus is a base station. The second communication apparatus and the fourth communication apparatus may be a same communication apparatus.

In this implementation, the fourth communication apparatus indicates, by using the first configuration information, the quantity of time domain symbols occupied by the first resource and the comb value corresponding to the first resource. The fourth communication apparatus indirectly indicates, by using the several possible relationships between the quantity of time domain symbols and the comb value, that the first resource needs to occupy the same frequency domain resource on the first time domain symbol and the second time domain symbol.

For example, the fourth communication apparatus indicates, to the first communication apparatus, that the quantity of time domain symbols occupied by the first resource is 5 and the comb value corresponding to the first resource is 4. In this way, the first communication apparatus can determine the first resource, and the first resource occupies the same frequency domain resource on the first time domain symbol and the second time domain symbol.

Optionally, the first configuration information further includes at least one of the following: a frequency domain offset corresponding to each of the time domain symbols occupied by the first resource, a position of a start time domain symbol in the time domain symbols occupied by the first resource, and a position of an end time domain symbol in the time domain symbols occupied by the first resource.

Based on the foregoing step 501a, optionally, the foregoing step 501 specifically includes the following.

The first communication apparatus determines the first resource based on the first configuration information.

For example, the quantity of time domain symbols occupied by the first resource is 5, and the corresponding comb value is 4. A start time domain symbol occupied by the first resource is a time domain symbol 2 in a slot, and an end time domain symbol occupied by the first resource is a time domain symbol 6 in the slot. Frequency domain offsets corresponding to the time domain symbol 2 to the time domain symbol 6 occupied by the first resource are 0, 2, 1, 3, and 0. Therefore, the first resource may include time-frequency resources represented by shadow parts shown in FIG. 6B.

The following describes Implementation 1 with reference to step 501b.

Optionally, the embodiment shown in FIG. 5B further includes step 501b. Step 501b may be performed before step 501.

501b: The fourth communication apparatus sends first indication information to the first communication apparatus. Correspondingly, the first communication apparatus receives the first indication information from the fourth communication apparatus.

The first indication information indicates that the first resource occupies a same frequency domain resource on the first time domain symbol and the second time domain symbol.

Based on the foregoing step 501b, optionally, the foregoing step 501 specifically includes the following.

The first communication apparatus determines the first resource based on the first indication information.

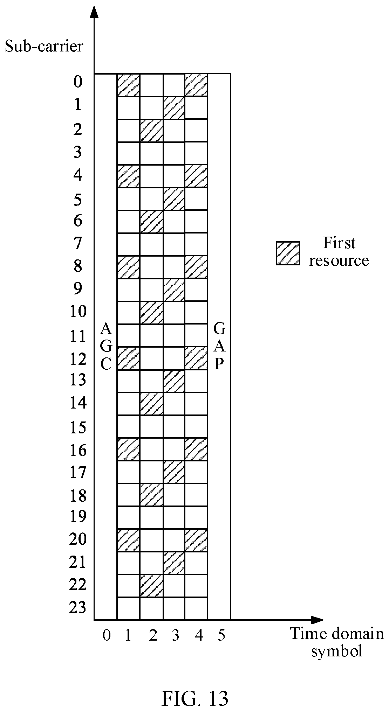

For example, as shown in FIG. 13, the fourth communication apparatus configures the first resource for the first communication apparatus, the first resource occupies four time domain symbols, and the comb value corresponding to the first resource is 4. The first communication apparatus may configure, based on the first indication information, that a 1^{st} time domain symbol and a last time domain symbol occupied by the first resource occupy a same frequency domain resource. The first resource includes time-frequency resources shown in shadow parts in FIG. 13.

It should be noted that, in a solution in which the first time domain symbol is an AGC symbol, and the first time domain symbol and the second time domain symbol are inconsecutive, the first resource may be divided into two parts. One part is a resource used for AGC, and the other part is a resource used to transmit the first positioning reference signal.

For example, the fourth communication apparatus may configure, for the first communication apparatus, the resource used to transmit the first positioning reference signal. For example, the resource used to transmit the first positioning reference signal occupies four time domain symbols: a 2^{nd} time domain symbol to a 5^{th} time domain symbol (referred to as a time domain symbol 1 to a time domain symbol 4 herein) in one slot respectively. A comb value corresponding to the resource used to transmit the first positioning reference signal is 4. However, a communication protocol may specify that a 1^{st} time domain symbol in a slot is used as an AGC symbol, and a frequency domain resource occupied by the resource used for AGC on the AGC symbol is the same as a frequency domain resource occupied by the last time domain symbol or a second last time domain symbol occupied by the first resource that is used to transmit the first positioning reference signal.

Optionally, a signal sent by the first communication apparatus on the AGC symbol is a copy of a signal sent on the last time domain symbol or the second last time domain symbol occupied by the first positioning reference signal transmitted by the first communication apparatus.

502: The first communication apparatus sends the first positioning reference signal to the second communication apparatus on the first resource. Correspondingly, the second communication apparatus receives the first positioning reference signal sent by the first communication apparatus on the first resource.

Optionally, the first communication apparatus is an access network device, and the second communication apparatus is an access network device. In this case, the first positioning reference signal may be a downlink positioning reference signal.

Optionally, the first communication apparatus is an access network device, and the second communication apparatus is a terminal device. In this case, the first positioning reference signal may be an uplink positioning reference signal.

Optionally, the first communication apparatus is a first terminal device, and the second communication apparatus is a second terminal device; the first communication apparatus is an RSU, and the second communication apparatus is a terminal device, or the first communication apparatus is a terminal device, and the second communication apparatus is an RSU. In this case, the first positioning reference signal may be a sidelink positioning reference signal (sidelink positioning reference signal, SL-PRS).

503: The second communication apparatus measures the first positioning reference signal to obtain a measurement result.

Optionally, the measurement result includes at least one of the following: time of arrival and an angle of arrival of the first positioning reference signal.

Specifically, the second communication apparatus may measure the first positioning reference signal, to obtain a multipath parameter, for example, time and an angle at which the first positioning reference signal arrives at the second communication apparatus. The second communication apparatus may measure a first positioning reference signal on the first time domain symbol to obtain a first phase. The second communication apparatus may measure a first positioning reference signal on the second time domain symbol to obtain a second phase. Then, the first communication apparatus determines a phase difference between the first phase and the second phase, and determines a Doppler shift between the first communication apparatus and the second communication apparatus by using the phase difference. Then, the first communication apparatus compensates for the multipath parameter by using the Doppler shift. In other words, the measurement result includes a multipath parameter, and the multipath parameter is compensated by using the Doppler shift. Alternatively, the measurement result includes a multipath parameter and a Doppler shift, and the multipath parameter is not compensated for by using the Doppler shift.

Optionally, the at least one time domain symbol further includes a third time domain symbol, and the first resource occupies a same frequency domain resource on the third time domain symbol and the first time domain symbol.

Specifically, the second communication apparatus may measure a first positioning reference signal on the third time domain symbol to obtain a third phase. The second communication apparatus may comprehensively determine a Doppler shift 1 between the first communication apparatus and the second communication apparatus by using the first phase, the second phase, and the third phase.

Optionally, the at least one time domain symbol further includes a fourth time domain symbol and a fifth time domain symbol. The first resource occupies a same frequency domain resource on the fourth time domain symbol and the fifth time domain symbol.

Specifically, the second communication apparatus may measure the first positioning reference signal on the first time domain symbol to obtain the first phase. The second communication apparatus may measure the first positioning reference signal on the second time domain symbol to obtain the second phase. Then, the first communication apparatus determines the phase difference between the first phase and the second phase, and determines the Doppler shift 1 between the first communication apparatus and the second communication apparatus by using the phase difference. The second communication apparatus may measure a first positioning reference signal on the fourth time domain symbol to obtain a fourth phase. The second communication apparatus may measure a first positioning reference signal on the fifth time domain symbol to obtain a fifth phase. Then, the second communication apparatus determines a phase difference between the fourth phase and the fifth phase, and determines a Doppler shift 2 between the first communication apparatus and the second communication apparatus by using the phase difference. The second communication apparatus may finally determine the Doppler shift between the first communication apparatus and the second communication apparatus with reference to the Doppler shift 1 and the Doppler shift 2.

Optionally, after the second communication apparatus determines the measurement result, the second communication apparatus may perform the following two possible solutions. The two solutions are separately described below.

The following describes the first possible solution with reference to step 504.

Optionally, the embodiment shown in FIG. 5B further includes step 504, and step 504 may be performed after step 503.

504: The second communication apparatus positions the first communication apparatus or the second communication apparatus based on the measurement result.

For example, the measurement result includes a multipath parameter obtained through Doppler shift compensation. As shown in FIG. 2, the first communication apparatus is the terminal device 201, and the second terminal device is the terminal device 202. The terminal device 202 may position the terminal device 201 or the terminal device 202 by using the multipath parameter.

For example, the measurement result includes the multipath parameter obtained through Doppler shift compensation. As shown in FIG. 3, the first communication apparatus is the RSU 302, and the second communication apparatus is the terminal device 301. The terminal device 301 may receive measurement results respectively corresponding to the RSU 302, the RSU 303, and the RSU 304. Then, the terminal device 301 positions the terminal device 301 by combining these multipath parameters.

The following describes the second possible solution with reference to step 505 and step 506.

Optionally, the embodiment shown in FIG. 5B further includes step 505 and step 506. Step 505 and step 506 may be performed after step 503.

505: The second communication apparatus sends the measurement result to the third communication apparatus. Correspondingly, the third communication apparatus receives the measurement result from the second communication apparatus.

For example, as shown in FIG. 1, the first communication apparatus is the terminal device 101, the second communication apparatus is the access network device 102, and the third communication apparatus is the LMF 104. The access network device 102 sends the measurement result to the LMF 104 via an LMF 103. In this way, the

LMF 104 can position the terminal device 101.

For example, as shown in FIG. 4, the first communication apparatus is the terminal device 402, the second communication apparatus is the terminal device 401, and the third communication apparatus is the LMF 404. The terminal device 401 sends the measurement result to the LMF 404 via the access network device 403. In this way, the LMF 404 can position the terminal device 402 or the terminal device 401.

506: The third communication apparatus positions the first communication apparatus or the second communication apparatus based on the measurement result.

For example, the measurement result includes a multipath parameter and a Doppler shift that are not compensated for by using the Doppler shift, and the third communication apparatus may compensate for the multipath parameter by using the Doppler shift. Then, the third communication apparatus positions the first communication apparatus or the second communication apparatus by using the compensated multipath parameter.

For example, as shown in FIG. 1, the first communication apparatus is the terminal device 101, the second communication apparatus is the access network device 102, and the third communication apparatus is the LMF 104. The access network device 102 sends the measurement result to the LMF 104 via the LMF 103. The LMF 104 compensates for the multipath parameter by using the Doppler shift. Then, the third communication apparatus positions the terminal device 101 by using the compensated multipath parameter.

In this embodiment of this application, the first communication apparatus determines the first resource. The first resource is used to transmit the first positioning reference signal, the first resource occupies at least two time domain symbols, the at least two time domain symbols are located in a same slot, the at least two time domain symbols includes the first time domain symbol and the second time domain symbol, and the first resource occupies the same frequency domain resource on the first time domain symbol and the second time domain symbol. The first communication apparatus sends the first positioning reference signal to the second communication apparatus on the first resource. It can be learned that the first resource occupies the same frequency domain resource on the first time domain symbol and the second time domain symbol. This helps the second communication apparatus perform precise positioning on the first communication apparatus or the second communication apparatus, to improve positioning precision. For example, a Doppler shift between devices introduces consecutive phase changes in time domain. Therefore, the second communication apparatus may accurately estimate the Doppler shift between the first communication apparatus and the second communication apparatus by using a phase difference between a phase obtained by measuring the first positioning reference signal on the first time domain symbol and a phase obtained by measuring the first positioning reference signal on the second time domain symbol. Doppler shift estimation performance is improved. In this way, the second communication apparatus can compensate for, based on the Doppler shift, some multipath parameters obtained through measurement, and then perform precise positioning on the first communication apparatus or the second communication apparatus by using compensated multipath parameters. Therefore, the positioning precision is improved, and positioning performance is improved.

In the foregoing examples, in an example other than the example in which the first time domain symbol is an AGC symbol, a position of the AGC symbol is merely an example, and does not constitute a limitation on this application. A position of the GAP symbol in the foregoing examples is also an example, and does not constitute a limitation on this application.

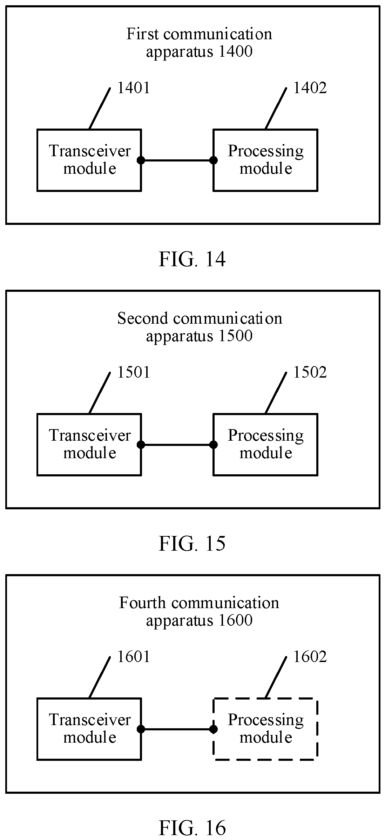

The following describes the first communication apparatus provided in embodiments of this application. FIG. 14 is a diagram of a structure of a first communication apparatus according to an embodiment of this application. The first communication apparatus may be configured to perform the steps performed by the first communication apparatus in the embodiment shown in FIG. 5B. For details, refer to the related descriptions in the foregoing method embodiments.

The first communication apparatus 1400 includes a transceiver module 1401 and a processing module 1402.

The transceiver module 1401 may implement a corresponding communication function. The transceiver module 1401 may also be referred to as a communication interface or a communication unit. The processing module 1402 is configured to perform a processing operation.

Optionally, the first communication apparatus 1400 may further include a storage module. The storage module may be configured to store instructions and/or data. The processing module 1402 may read the instructions and/or the data in the storage module, so that the communication apparatus implements the method embodiment shown in FIG. 5B.

The first communication apparatus 1400 may be configured to execute the actions performed by the first communication apparatus in the foregoing method embodiments. The first communication apparatus 1400 may be a first communication apparatus or a component that may be disposed in the first communication apparatus. The transceiver module 1401 is configured to perform a receiving-related operation on a side of the first communication apparatus in the foregoing method embodiments, and the processing module 1402 is configured to perform a processing-related operation on the side of the first communication apparatus in the foregoing method embodiments.

Optionally, the transceiver module 1401 may include a sending module and a receiving module. The sending module is configured to perform the sending operation of the first communication apparatus in the foregoing method embodiment shown in FIG. 5B. The receiving module is configured to perform the receiving operation of the first communication apparatus in the foregoing method embodiment shown in FIG. 5B.

It should be noted that the first communication apparatus 1400 may include the sending module but not include the receiving module. Alternatively, the first communication apparatus 1400 may include the receiving module but not include the sending module. This may be specifically determined depending on whether the foregoing solution performed by the first communication apparatus 1400 includes a sending action and a receiving action.

In a possible implementation, the first communication apparatus 1400 may perform the following solution.

The processing module 1402 is configured to determine a first resource. The first resource is used to transmit a first positioning reference signal, the first resource occupies at least two time domain symbols, the at least two time domain symbols are located in a same slot, the at least two time domain symbols include a first time domain symbol and a second time domain symbol, and the first resource occupies a same frequency domain resource on the first time domain symbol and the second time domain symbol.

The transceiver module 1401 is configured to send the first positioning reference signal to a second communication apparatus on the first resource.

In a possible implementation, a first time-frequency unit occupies one slot, half a slot, or a part of time domain symbols in one slot in time domain.

In another possible implementation, the first time domain symbol is a 1^{st} time domain symbol occupied by the first resource, and the second time domain symbol is a last time domain symbol or a second last time domain symbol occupied by the first resource.

In another possible implementation, the first time domain symbol is an AGC symbol, and the first time domain symbol and the second time domain symbol are inconsecutive.

In another possible implementation, the first resource occupies five, seven, nine, or 11 time domain symbols in time domain.

In another possible implementation, a quantity of time domain symbols occupied by the first resource in time domain is 1 greater than a comb value corresponding to the first resource.

In another possible implementation, the first resource occupies Y time domain symbols in time domain, the comb value corresponding to the first resource is X, and X is equal to an integer multiple of Y and plus 1.

In another possible implementation, the first resource occupies Y time domain symbols in time domain, the comb value corresponding to the first resource is X, X is less than Y, and Y is not an integer multiple of X.

In another possible implementation, the at least two time domain symbols further include a third time domain symbol, and the first resource occupies a same frequency domain resource on the third time domain symbol and the first time domain symbol.

In another possible implementation, the at least two time domain symbols further include a fourth time domain symbol and a fifth time domain symbol, and the first resource occupies a same frequency domain resource on the fourth time domain symbol and the fifth time domain symbol.

In another possible implementation, in sub-carriers occupied by the first resource on any one of the at least two time domain symbols, there is an equal frequency domain interval between any two adjacent sub-carriers.

In another possible implementation, a bandwidth occupied by the first resource in frequency domain is a resource pool bandwidth.

In another possible implementation, the transceiver module 1401 is further configured to:
receive first configuration information from a fourth communication apparatus. The first configuration information is used to configure the first resource, the first resource occupies Y time domain symbols in time domain, and a comb value corresponding to the first resource is X, where Y is equal to X plus 1, or Y is equal to an integer multiple of X and plus 1, or X is less than Y and Y is not an integer multiple of X.

The processing module 1402 is specifically configured to:
determine the first resource based on the first configuration information.

In another possible implementation, the transceiver module 1401 is further configured to:
receive first indication information from the fourth communication apparatus. The first indication information indicates that the first resource occupies the same frequency domain resource on the first time domain symbol and the second time domain symbol.

The processing module 1402 is specifically configured to:
determine the first resource based on the first indication information.

In another possible implementation, the first time-frequency unit further includes a second resource. The second resource is used to transmit a second positioning reference signal of a fifth communication apparatus, the second resource occupies at least two time domain symbols, the at least two time domain symbols include a sixth time domain symbol and a seventh time domain symbol, and the second resource occupies a same frequency domain resource on the sixth time domain symbol and the seventh time domain symbol.

The first resource and the second resource occupy a same time domain resource, and frequency domain resources occupied by the first resource and the second resource on the same time domain symbol may meet a frequency division multiplexing relationship. Alternatively, the first resource and the second resource occupy different time domain resources.

The following describes the second communication apparatus provided in embodiments of this application. FIG. 15 is a diagram of a structure of a second communication apparatus according to an embodiment of this application. The second communication apparatus may be configured to perform the steps performed by the second communication apparatus in the embodiment shown in FIG. 5B. For details, refer to the related descriptions in the foregoing method embodiments.

The second communication apparatus 1500 includes a transceiver module 1501 and a processing module 1502.

The transceiver module 1501 may implement a corresponding communication function. The transceiver module 1501 may also be referred to as a communication interface or a communication unit. The processing module 1502 is configured to perform a processing operation.

Optionally, the second communication apparatus 1500 may further include a storage module. The storage module may be configured to store instructions and/or data. The processing module 1502 may read the instructions and/or the data in the storage module, so that the communication apparatus implements the method embodiment shown in FIG. 5B.

The second communication apparatus 1500 may be configured to execute the action performed by the second communication apparatus in the foregoing method embodiments. The second communication apparatus 1500 may be a second communication apparatus or a component that may be disposed in the second communication apparatus. The transceiver module 1501 is configured to perform a receiving-related operation on a side of the second communication apparatus in the foregoing method embodiments, and the processing module 1502 is configured to perform a processing-related operation on the side of the second communication apparatus in the foregoing method embodiments.

Optionally, the transceiver module 1501 may include a sending module and a receiving module. The sending module is configured to perform the sending operation of the second communication apparatus in the foregoing method embodiment shown in FIG. 5B. The receiving module is configured to perform the receiving operation of the second communication apparatus in the foregoing method embodiment shown in FIG. 5B.

It should be noted that the second communication apparatus 1500 may include the sending module but not include the receiving module. Alternatively, the second communication apparatus 1500 may include the receiving module but not include the sending module. This may be specifically determined depending on whether the foregoing solution performed by the second communication apparatus 1500 includes a sending action and a receiving action.

In a possible implementation, the second communication apparatus 1500 may perform the following solution.

The transceiver module 1501 is configured to receive a first positioning reference signal sent by a first communication apparatus on a first resource.

The first resource occupies at least two time domain symbols, the at least two time domain symbols are located in a same slot, the at least two time domain symbols include a first time domain symbol and a second time domain symbol, and the first resource occupies a same frequency domain resource on the first time domain symbol and the second time domain symbol.

The processing module 1502 is configured to: measure the first positioning reference signal to obtain a measurement result; and position the first communication apparatus or the second communication apparatus 1500 based on the measurement result.

In another possible implementation, the second communication apparatus 1500 may perform the following solution.

The transceiver module 1501 is configured to receive the first positioning reference signal sent by the first communication apparatus on the first resource.

The first resource is located in a first time-frequency unit, the first resource occupies at least two time domain symbols, the at least two time domain symbols include the first time domain symbol and the second time domain symbol, and the first resource occupies the same frequency domain resource on the first time domain symbol and the second time domain symbol.

The processing module 1502 is configured to measure the first positioning reference signal to obtain a measurement result.

The transceiver module 1501 is further configured to send the measurement result to a third communication apparatus.

Optionally, the first time-frequency unit occupies one slot, half a slot, or a part of time domain symbols in one slot in time domain.

Optionally, the first time domain symbol is a 1^{st} time domain symbol occupied by the first resource, and the second time domain symbol is a last time domain symbol or a second last time domain symbol occupied by the first resource.

Optionally, the first time domain symbol is an AGC symbol, and the first time domain symbol and the second time domain symbol are inconsecutive.

Optionally, the first resource occupies five, seven, nine, or 11 time domain symbols in time domain.

Optionally, a quantity of time domain symbols occupied by the first resource in time domain is 1 greater than a comb value corresponding to the first resource.

Optionally, the first resource occupies Y time domain symbols in time domain, the comb value corresponding to the first resource is X, and X is equal to an integer multiple of Y and plus 1.

Optionally, the first resource occupies Y time domain symbols in time domain, the comb value corresponding to the first resource is X, X is less than Y, and Y is not an integer multiple of X.

Optionally, the at least two time domain symbols further include a third time domain symbol, and the first resource occupies a same frequency domain resource on the third time domain symbol and the first time domain symbol.

Optionally, the at least two time domain symbols further include a fourth time domain symbol and a fifth time domain symbol, and the first resource occupies a same frequency domain resource on the fourth time domain symbol and the fifth time domain symbol.

Optionally, in sub-carriers occupied by the first resource on any one of the at least two time domain symbols, there is an equal frequency domain interval between any two adjacent sub-carriers.

Optionally, a bandwidth occupied by the first resource in frequency domain is a resource pool bandwidth.

Optionally, the first time-frequency unit further includes a second resource. The second resource is used to transmit a second positioning reference signal of a fifth communication apparatus, the second resource occupies at least two time domain symbols, the at least two time domain symbols include a sixth time domain symbol and a seventh time domain symbol, and the second resource occupies a same frequency domain resource on the sixth time domain symbol and the seventh time domain symbol.

The first resource and the second resource occupy a same time domain resource, and frequency domain resources occupied by the first resource and the second resource on the same time domain symbol may meet a frequency division multiplexing relationship. Alternatively, the first resource and the second resource occupy different time domain resources.

The following describes the fourth communication apparatus provided in embodiments of this application. FIG. 16 is a diagram of a structure of a fourth communication apparatus according to an embodiment of this application. The fourth communication apparatus may be configured to perform the steps performed by the fourth communication apparatus in the embodiment shown in FIG. 5B. For details, refer to the related descriptions in the foregoing method embodiments.

The fourth communication apparatus 1600 includes a transceiver module 1601. Optionally, the fourth communication apparatus 1600 further includes a processing module 1602.

The transceiver module 1601 may implement a corresponding communication function. The transceiver module 1601 may also be referred to as a communication interface or a communication unit. The processing module 1602 is configured to perform a processing operation.

Optionally, the fourth communication apparatus 1600 may further include a storage module. The storage module may be configured to store instructions and/or data. The processing module 1602 may read the instructions and/or the data in the storage module, so that the communication apparatus implements the method embodiment shown in FIG. 5B.

The fourth communication apparatus 1600 may be configured to execute the action performed by the fourth communication apparatus in the foregoing method embodiments. The fourth communication apparatus 1600 may be a fourth communication apparatus or a component that may be disposed in the fourth communication apparatus. The transceiver module 1601 is configured to perform a receiving-related operation on a side of the fourth communication apparatus in the foregoing method embodiments, and the processing module 1602 is configured to perform a processing-related operation on the side of the fourth communication apparatus in the foregoing method embodiments.

Optionally, the transceiver module 1601 may include a sending module and a receiving module. The sending module is configured to perform the sending operation of the fourth communication apparatus in the foregoing method embodiment shown in FIG. 5B. The receiving module is configured to perform the receiving operation of the fourth communication apparatus in the foregoing method embodiment shown in FIG. 5B.

It should be noted that the fourth communication apparatus 1600 may include the sending module but not include the receiving module. Alternatively, the fourth communication apparatus 1600 may include the receiving module but not include the sending module. This may be specifically determined depending on whether the foregoing solution performed by the fourth communication apparatus 1600 includes a sending action and a receiving action.

In a possible implementation, the fourth communication apparatus 1600 is configured to perform the following solution.

The transceiver module 1601 is configured to send first configuration information to a first communication apparatus. The first configuration information is used to configure the first resource, the first resource occupies Y time domain symbols in time domain, and a comb value corresponding to the first resource is X, where Y is equal to X plus 1, or Y is equal to an integer multiple of X and plus 1, or X is less than Y and Y is not an integer multiple of X.

In another possible implementation, the fourth communication apparatus 1600 is configured to perform the following solution.

The transceiver module 1601 is configured to send first indication information to a first communication apparatus. The first indication information indicates that the first resource occupies a same frequency domain resource on a first time domain symbol and a second time domain symbol, the first resource occupies at least two time domain symbols, the at least two time domain symbols are located in a same slot, and the first resource is used to transmit a first positioning reference signal of the first communication apparatus.

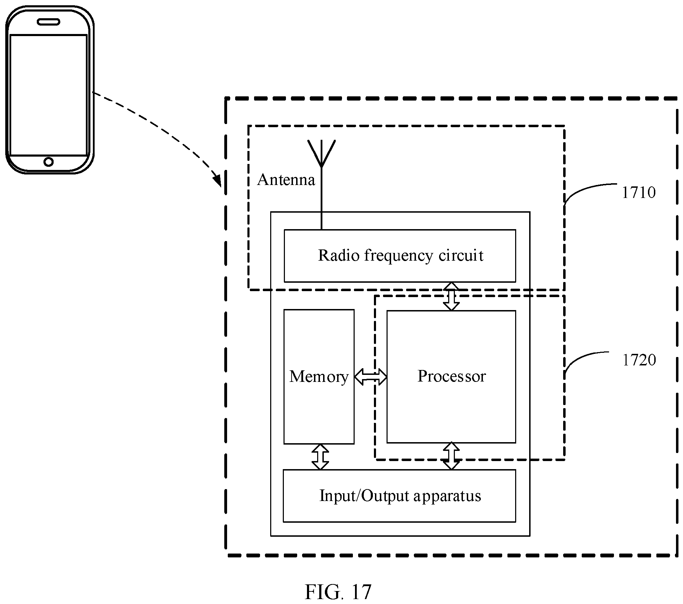

FIG. 17 is a diagram of a possible structure in which a communication apparatus is a terminal device.

FIG. 17 is a diagram of a simplified structure of a terminal device. For ease of understanding and illustration, an example in which the terminal device is a mobile phone is used in FIG. 17. As shown in FIG. 17, the terminal device includes a processor, a memory, a radio frequency circuit, an antenna, and an input/output apparatus.

The processor is mainly configured to: process a communication protocol and communication data, control the terminal device, execute a software program, process data of the software program, and the like. The memory is mainly configured to store the software program and data.

The radio frequency circuit is mainly configured to: perform conversion between a baseband signal and a radio frequency signal, and process the radio frequency signal.

The antenna is mainly configured to: receive and send a radio frequency signal in a form of an electromagnetic wave.

The input/output apparatus, such as a touchscreen, a display, or a keyboard, is mainly configured to: receive data input by a user and output data to the user.

It should be noted that some types of terminal devices may have no input/output apparatus.

When needing to send data, after performing baseband processing on to-be-sent data, the processor outputs a baseband signal to the radio frequency circuit, and the radio frequency circuit performs radio frequency processing on the baseband signal and then sends the radio frequency signal to the outside in the form of an electromagnetic wave through the antenna. When the data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 17 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device. As shown in FIG. 17, the terminal device includes a transceiver unit 1710 and a processing unit 1720. The transceiver unit may also be referred to as a transceiver, a transceiver machine, a transceiver apparatus, or the like. The processing unit may also be referred to as a processor, a processing board, a processing module, a processing apparatus, or the like.

Optionally, a component that is in the transceiver unit 1710 and that is configured to implement a receiving function may be considered as a receiving unit, and a component that is in the transceiver unit 1710 and that is configured to implement a sending function may be considered as a sending unit. In other words, the transceiver unit 1710 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1710 is configured to perform the sending operation and the receiving operation of the first communication apparatus or the second communication apparatus in the foregoing method embodiments, and the processing unit 1720 is configured to perform an operation other than the sending operation and the receiving operation of the first communication apparatus or the second communication apparatus in the foregoing method embodiments.

When the first communication apparatus or the second communication apparatus is a chip, the chip includes a transceiver unit and a processing unit. The transceiver unit may be an input/output circuit or a communication interface. The processing unit is a processor, a microprocessor, an integrated circuit, or a logic circuit integrated on the chip.

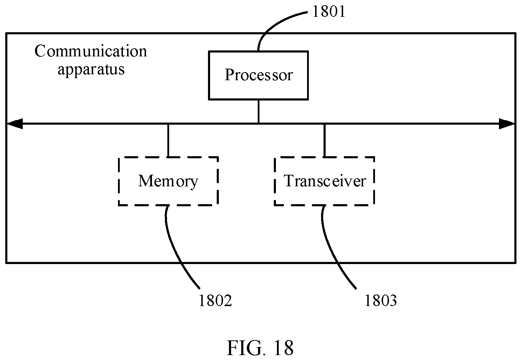

This application further provides a communication apparatus. FIG. 18 is a diagram of another structure of a communication apparatus according to an embodiment of this application. The communication apparatus may be configured to perform the steps performed by the first communication apparatus, the second communication apparatus, or the fourth communication apparatus in the embodiment shown in FIG. 5. For details, refer to the related descriptions in the foregoing method embodiments.

The communication apparatus includes a processor 1801. Optionally, the communication apparatus further includes a memory 1802 and a transceiver 1803.

In a possible implementation, the processor 1801, the memory 1802, and the transceiver 1803 are separately connected through a bus, and the memory stores computer instructions.

Optionally, the processing module 1402 in the foregoing embodiment may be specifically the processor 1801 in this embodiment. Therefore, a specific implementation of the processor 1801 is not described again. The transceiver module 1401 in the foregoing embodiment may be specifically the transceiver 1803 in this embodiment. Therefore, a specific implementation of the transceiver 1803 is not described again.

Optionally, the processing module 1502 in the foregoing embodiment may be specifically the processor 1801 in this embodiment. Therefore, the specific implementation of the processor 1801 is not described again. The transceiver module 1501 in the foregoing embodiment may be specifically the transceiver 1803 in this embodiment. Therefore, the specific implementation of the transceiver 1803 is not described again.

Optionally, the processing module 1602 in the foregoing embodiment may be specifically the processor 1801 in this embodiment. Therefore, the specific implementation of the processor 1801 is not described again. The transceiver module 1601 in the foregoing embodiment may be specifically the transceiver 1803 in this embodiment. Therefore, the specific implementation of the transceiver 1803 is not described again.

An embodiment of this application further provides a communication system, and the communication system includes a first communication apparatus and a second communication apparatus. The first communication apparatus is configured to perform all or some of the steps performed by the first communication apparatus in the embodiment shown in FIG. 5B. The second communication apparatus is configured to perform all or some of the steps performed by the second communication apparatus in the embodiment shown in FIG. 5B.

Optionally, the communication system further includes a third communication apparatus, and the third communication apparatus is configured to perform all or some of the steps performed by the third communication apparatus in the embodiment shown in FIG. 5B.

Optionally, the communication system further includes a fourth communication apparatus, and the fourth communication apparatus is configured to perform all or some of the steps performed by the fourth communication apparatus in the embodiment shown in FIG. 5B.

An embodiment of this application further provides a computer program product including instructions. When the computer program product is run on a computer, the computer is enabled to perform the method in the embodiment shown in FIG. 5B.

An embodiment of this application further provides a computer-readable storage medium, including computer instructions. When the computer instructions are run on a computer, the computer is enabled to perform the method in the embodiment shown in FIG. 5B.

An embodiment of this application further provides a chip apparatus, including a processor, configured to: connect to a memory and invoke a program stored in the memory, so that the processor performs the method in the embodiment shown in FIG. 5B.

Any processor mentioned above may be a general-purpose central processing unit, a microprocessor, an application-specific integrated circuit (application-specific integrated circuit, ASIC), or one or more integrated circuits configured to control program execution of the method in the embodiment shown in FIG. 5B. Any memory mentioned above may be a read-only memory (read-only memory, ROM), another type of static storage device that can store static information and instructions, a random access memory (random access memory, RAM), or the like.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the current technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium, for example, a USB flash drive, a removable hard disk, a read-only memory (read-only memory, ROM), a RAM, a magnetic disk, or an optical disc, that can store program code.

The foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A communication method, wherein the method comprises:
determining, by a first communication apparatus, a first resource, wherein
the first resource is used to transmit a first positioning reference signal, the first resource occupies at least two time domain symbols, the at least two time domain symbols are located in a same slot, the at least two time domain symbols comprise a first time domain symbol and a second time domain symbol, and the first resource occupies a same frequency domain resource on the first time domain symbol and the second time domain symbol; and
sending, by the first communication apparatus, the first positioning reference signal to a second communication apparatus on the first resource.

2. A communication method, wherein the method comprises:
receiving, by a second communication apparatus, a first positioning reference signal sent by a first communication apparatus on a first resource, wherein
the first resource occupies at least two time domain symbols, the at least two time domain symbols are located in a same slot, the at least two time domain symbols comprise a first time domain symbol and a second time domain symbol, and the first resource occupies a same frequency domain resource on the first time domain symbol and the second time domain symbol;
measuring, by the second communication apparatus, the first positioning reference signal to obtain a measurement result;
positioning, by the second communication apparatus, the first communication apparatus or the second communication apparatus based on the measurement result; or sending, by the second communication apparatus, the measurement result to a third communication apparatus, wherein the measurement result is used by the third communication apparatus to position the first communication apparatus or the second communication apparatus.

3. The method according to claim 1 or 2, wherein the first resource occupies a first time-frequency unit, and the first time-frequency unit occupies one slot, half a slot, or a part of time domain symbols in one slot in time domain.

4. The method according to any one of claims 1 to 3, wherein the first time domain symbol is a 1^{st} time domain symbol occupied by the first resource, and the second time domain symbol is a last time domain symbol or a second last time domain symbol occupied by the first resource.

5. The method according to any one of claims 1 to 4, wherein the first time domain symbol is an automatic gain control AGC symbol, and the first time domain symbol and the second time domain symbol are inconsecutive.

6. The method according to any one of claims 1 to 5, wherein a quantity of time domain symbols occupied by the first resource in time domain is 1 greater than a comb value corresponding to the first resource.

7. The method according to any one of claims 1 to 5, wherein the first resource occupies Y time domain symbols in time domain, a comb value corresponding to the first resource is X, and X is equal to an integer multiple of Y and plus 1.

8. The method according to any one of claims 1 to 5, wherein the first resource occupies Y time domain symbols in time domain, a comb value corresponding to the first resource is X, X is less than Y, and Y is not an integer multiple of X.

9. The method according to any one of claims 1 to 8, wherein the at least two time domain symbols further comprise a third time domain symbol, and the first resource occupies a same frequency domain resource on the third time domain symbol and the first time domain symbol.

10. The method according to any one of claims 1 to 8, wherein the at least two time domain symbols further comprise a fourth time domain symbol and a fifth time domain symbol, and the first resource occupies a same frequency domain resource on the fourth time domain symbol and the fifth time domain symbol.

11. The method according to any one of claims 1 to 10, wherein in sub-carriers occupied by the first resource on any one of the at least two time domain symbols, there is an equal frequency domain interval between any two adjacent sub-carriers.

12. The method according to any one of claims 1 to 11, wherein a bandwidth occupied by the first resource in frequency domain is a resource pool bandwidth.

13. The method according to any one of claims 1 and 3 to 12, wherein the method further comprises:
receiving, by the first communication apparatus, first configuration information from a fourth communication apparatus, wherein the first configuration information is used to configure the first resource, the first resource occupies Y time domain symbols in time domain, and a comb value corresponding to the first resource is X, wherein Y is equal to X plus 1, or Y is equal to an integer multiple of X and plus 1, or X is less than Y and Y is not an integer multiple of X; and
the determining, by a first communication apparatus, a first resource comprises:
determining, by the first communication apparatus, the first resource based on the first configuration information.

14. The method according to any one of claims 1 and 3 to 12, wherein the method further comprises:
receiving, by the first communication apparatus, first indication information from a fourth communication apparatus, wherein the first indication information indicates that the first resource occupies the same frequency domain resource on the first time domain symbol and the second time domain symbol; and
the determining, by a first communication apparatus, a first resource comprises:
determining, by the first communication apparatus, the first resource based on the first indication information.

15. A communication apparatus, wherein the communication apparatus comprises a transceiver module and a processing module, wherein
the transceiver module is configured to perform the receiving and sending operations according to any one of claims 1 and 3 to 14, and the processing module is configured to perform the processing operation according to any one of claims 1 and 3 to 14; or
the transceiver module is configured to perform the receiving and sending operations according to any one of claims 2 to 12, and the processing module is configured to perform the processing operation according to any one of claims 2 to 12.

16. A communication apparatus, wherein the communication apparatus comprises a processor, and the processor is configured to execute a computer program or computer instructions in a memory, to perform the method according to any one of claims 1 and 3 to 14, or perform the method according to any one of claims 2 to 12.

17. The communication apparatus according to claim 16, wherein the communication apparatus further comprises the memory.

18. A computer-readable storage medium, wherein the computer-readable storage medium stores a computer program, and when the computer program is executed by a communication apparatus, the communication apparatus is enabled to perform the method according to any one of claims 1 and 3 to 14, or the communication apparatus is enabled to perform the method according to any one of claims 2 to 12.
